# EUROPÄISCHE PATENTSCHRIFT

(11) **EP 4 384 789 B1**
(45) Veröffentlichungstag und Bekanntmachung des Hinweises auf die Patenterteilung: **23.07.2025**
(21) Anmeldenummer: 22754894.8
(22) Anmeldetag: 10.08.2022
(51) Int. Cl.: G01L 5/24, F16B 31/02

(54) **UNTERLEGSCHEIBE SOWIE SCHRAUBVERBINDUNGSSYSTEM**
WASHER AND SCREW-CONNECTION SYSTEM
RONDELLE ET SYSTÈME D'ASSEMBLAGE PAR VIS

(30) Priorität: 11.08.2021 DE 102021208777
(43) Veröffentlichungstag der Anmeldung: 19.06.2024
(73) Patentinhaber: Fraunhofer-Gesellschaft zur Förderung der angewandten Forschung e.V., 80686 München (DE)
(72) Erfinder: BIEHL, Saskia Nina, 64289 Darmstadt (DE); LIPP, Klaus, 64289 Darmstadt (DE); JÖCKEL, Andre, 64289 Darmstadt (DE); GIETZEN, Martin, 64289 Darmstadt (DE); BAUMGARTNER, Jörg, 64289 Darmstadt (DE); JAKOBS, Julia, 38108 Braunschweig (DE); PLOGMEYER, Marcel, 38108 Braunschweig (DE); WORM, Johannes, 91058 Erlangen (DE); WIECZOREK, Johannes, 91058 Erlangen (DE); SPIES, Peter, 91058 Erlangen (DE)
(74) Vertreter: Pfitzner, Hannes
(86) Internationale Anmeldenummer: PCT/EP2022/072460
(87) Internationale Veröffentlichungsnummer: WO 2023/017087

(56) Entgegenhaltungen:
- CN-A- 111 271 359
- DE-A1- 102005 059 938
- DE-C1- 19 854 062
- US-A- 5 991 676
- US-A1- 2013 139 604
- US-B1- 6 378 384

## Beschreibung

Ausführungsbeispiele der vorliegenden Erfindung beziehen sich auf ein Schraubverbindungssystem mit einer Unterlegscheibe sowie die Unterlegscheibe an sich. Weitere Ausführungsbeispiele beziehen sich auf ein Verfahren zur Herstellung einer Schraubverbindung unter Verwendung eines Schraubverbindungssystems und/oder einer Unterlegscheibe.

Bereits in der DE 10 2010/001 144 A1 wird ein Schraubverbindungssystem mit einer Unterlegscheibe offenbart, die eine Kraftmessung aufweist. Die Kraftmessung kann beispielsweise durch eine Art Sensorschicht beziehungsweise Sensorscheibe erfolgen. Eine relevante zu sensierende Kraft ist die durch das Drehmoment in das Verbindungselement eingebrachte Zugkraft. Diese Kraft wird im Regelfall nur beim Anziehen, z. B. mittels eines Drehmomentschlüssels, gemessen, wobei durch die hier erläuterte Sensorscheibe es möglich ist, auch die Kraft während des eingebauten Zustands in einem Bauwerk oder ähnlichem zu monitoren. Problematisch ist jedoch, dass es beim Aufbringen des Drehmoments mittels Anziehen der Schraube häufig zu Scherbewegungen im Bereich der Sensorscheibe beziehungsweise der auf der Sensorscheibe aufgebrachten Sensorschicht kommt, so dass hier die Sensorscheibe beschädigt werden kann. Deshalb besteht der Bedarf nach einem verbesserten Ansatz.

Die US 5991676 A beschreibt einen Kraftsensor in Form einer Scheibe. Ein sensorisches Schichtsystem ist zwischen zwei metallischen Lagen angeordnet. Eine Rotation zwischen den metallischen Lagen wird dadurch verhindert, dass Stifte von einer metallischen Lage in komplementäre Öffnungen in der anderen metallischen Lage passen. Die DE 19854062 C1 beschreibt eine Vorrichtung und ein Verfahren zur Bestimmung und Protokollierung von Vorspannung bei Schraubverbindungen. Die US 2013/139604 A1 erläutert Sendestationen im Zusammenhang mit Kraftsensoriken. Darüber hinaus ist auch noch auf die DE 102005059938 A1, US 6378384 B1 und CN 111271359 A hinzuweisen, die weiteren Stand der Technik formen.

Aufgabe der vorliegenden Erfindung ist es, ein Verbindungssystem mit Sensorfunktionalität zu schaffen, das hinsichtlich Haltbarkeit und Ergonomie, insbesondere Ergonomie beim Einbau, optimiert ist.

Die Aufgabe wird durch den Gegenstand der unabhängigen Patentansprüche gelöst.

### Aspekt Unterlegscheibe

Ausführungsbeispiele der vorliegenden Erfindung schaffen eine Unterlegscheibe mit einem Trägerelement, einem oder mehreren Gegenelementen sowie einer Sensorschicht beziehungsweise einem sensorischen Schichtsystem, das zwischen dem Trägerelement und dem Gegenelement angeordnet ist. Das Sensorschichtelement ist ausgebildet, um ausgehend von einer zwischen dem Trägerelement und Gegenelement vorherrschenden Kraft entlang einer Schraubachse beziehungsweise einer vorherrschenden Druckkraft oder Vibration ein Sensorsignal auszugeben. Das Trägerelement und das Gegenelement sind entlang der Schraubachse angeordnet, wobei das Trägerelement eine Geometrie aufweist, die mit einer Geometrie des Gegenelements in Eingriff bringbar ist, um so eine Rotation zwischen dem Trägerelement und dem Gegenelement, insbesondere eine Rotation zwischen dem Trägerelement und dem Gegenelement um die Schraubachse zu begrenzen oder zu vermeiden. Entsprechend Ausführungsbeispielen können hierzu das Trägerelement und das Gegenelement eine Art Formschluss ausbilden. Beispiele für einen derartigen Formschluss wäre, dass die Geometrie des Trägerelements eine radiale Innenkontur aufweist, wie zum Beispiel eine Zahnform, Vielzahnform oder Sechskantform. Entsprechend Ausführungsbeispielen könnte dann die Geometrie des Gegenelements eine radiale Außenkontur bilden, so wie zum Beispiel eine Zahnform, Vielzahnform oder Sechskantform. Hierbei ist es vorteilhaft (aber nicht zwingend), wenn die Innenkontur und die Außenkontur aneinander angepasst sind, so dass die Innenkontur beispielsweise in die Außenkontur passt und dann eine laterale Bewegung entlang der Schraub-achse ausführen kann, wobei dann eben die Rotationsbewegung um die Schraubachse herum begrenzt ist.

An dieser Stelle sei angemerkt, dass entsprechend Ausführungsbeispielen die Schraubachse deshalb als Schraubachse bezeichnet ist, weil durch die Unterlegscheibe eine Schraube hindurchragen kann, die die Schraubachse definiert. Beispielsweise ist die Schraubachse identisch oder parallel zu der Achse zugehörig zu der Bohrung der Unterlegscheibe. Die Unterlegscheibe kann also entsprechend Ausführungsbeispielen ein Loch aufweisen und/oder ein rotatorisches Element darstellen, das (in der Mitte) ein Loch hat.

Ausführungsbeispielen dieses Aspekts der Erfindung liegt die Erkenntnis zugrunde, dass es durch die Verwendung eines Trägerelements und eines oder mehrere Gegenelements mit dazwischenliegenden Sensorschichtsystemen möglich ist, das dazwischenliegende Sensorschichtsystem zu schützen. Dies erfolgt erstens dadurch, dass keine weiteren Bauteile, wie zum Beispiel die Schraube mit dem dazwischenliegenden Sensorschichtsystem, in Kontakt kommen können und so eine Beschädigung derselben ausgeschlossen wird. Zweitens wird ein Scheren beziehungsweise eine oberflächliche Verletzung des Sensorschichtsystems beim Anziehen dadurch verhindert, dass die Rotation zwischen dem Trägerelement und dem Gegenelement begrenzt wird. Insofern schaffen Ausführungsbeispiele der vorliegenden Erfindung vorteilhafterweise ein Sensorschichtsystem, bei welchem ein Monitoring von physikalischen Parametern, wie zum Beispiel einer Kraft, möglich ist und gleichzeitig die Sensorschicht geschützt wird. Das erhöht die Zuverlässigkeit und Lebensdauer sowie insbesondere auch die Ergonomie beim Anziehen.

Entsprechend Ausführungsbeispielen weist das Trägerelement eine Ausnehmung mit der Geometrie des Trägerelements als radiale Innengeometrie auf, wobei das Gegenelement eine radiale Außengeometrie entsprechend der Geometrie des Trägerelements aufweist. Hierbei kann das Gegenelement in die Ausnehmung des Trägerelements eingelegt sein. Entsprechend Ausführungsbeispielen kann auch eine Einbettung des Gegenelements in die Ausnehmung erfolgen. Bezüglich den Größen sei angemerkt, dass die radiale Größe der Ausnehmung mindestens genauso, bevorzugter Weise aber minimal größer ist als die radiale Ausdehnung der Außengeometrie des Gegenelements. Entsprechend Ausführungsbeispielen eignet sich für die Außengeometrie eine Sechskantform und/oder eine Schlüsselweite. Hierdurch entstehen zwischen dem Trägerelement und dem Gegenelement ein oder mehrere definierte Kontaktflächen für die radiale Ineingriffnahme, so dass die Rotation zwischen diesen Elementen effektiv verhindert werden kann.

Entsprechend Ausführungsbeispielen kann das Gegenelement auch mehrteilig ausgeführt sein.

Entsprechend weiteren Ausführungsbeispielen ist die Sensorschicht beziehungsweise das sensorische Schichtsystem auf einem separaten Träger angeordnet, der zwischen dem Trägerelement und dem Gegenelement eingebettet ist. Entsprechend Ausführungsbeispielen weist das Trägerelement und/oder das Gegenelement ein oder mehrere definierte Kontaktflächen (Kontakt in axialer Richtung ) auf, wie zum Beispiel Erhebungen (mit reduzierter Oberfläche) auf einer der Hauptoberfläche. Diese dienen als Kontaktflächen zur Sensorschicht beziehungsweise dem sensorischen Schichtsystem. Insgesamt wird durch die Kontaktflächen die axialen kraftübertragende Oberfläche (im Vergleich zur gesamten Projektionsfläche des Bauteils) reduziert und dadurch vorteilhafterweise genau definiert.

Entsprechend weiteren Ausführungsbeispielen ist das sensorische Schichtsystem ausgebildet, um ausgehend von einer vorherrschenden Temperatur Temperatursignale auszugeben und/oder um ausgehend von einer vorherrschenden Vibration ein Vibrationssignal (die Vibration beschreibendes Vibrationssignal) auszugeben.

### Aspekt Schraubverbindungssystem

Entsprechend weiteren Ausführungsbeispielen ist die Unterlegscheibe mit einer Schraube, insbesondere einer DIN-Schraube/herkömmlichen Schraube kombinierbar. Das heißt also, dass ein Ausführungsbeispiel des weiteren Aspekts ein Schraubverbindungssystem mit einem Schraubelement, insbesondere einer Schraube, einer Mutter, einem Bolzen, einer herkömmlichen Schraube, einer DIN-Schraube, einer DIN-Mutter oder einer (Außen)-Sechskantschraube schafft, die mit der Unterlegscheibe kombiniert ist. Das Schraubelement ragt entlang einer Schraubachse durch die Unterlegscheibe/Bohrung der Unterlegscheibe hindurch.

Ausführungsbeispielen dieses Aspekts der Erfindung liegt also die Erkenntnis zugrunde, dass die Verwendung einer herkömmlichen DIN-Schraube beziehungsweise allgemein einer herkömmlichen Schraube in Verbindung mit einer Unterlegscheibe vorteilhafterweise ein Sensorsystem schafft. Dies hat einerseits den Vorteil, dass eine Kraft, wie zum Beispiel die Anzugskraft beziehungsweise die Kraft während der Befestigung, überwacht werden kann, wobei durch die oben erläuterten Vorteile der Einbau stark vereinfacht ist und gleichzeitig auch auf kostengünstige Komponenten gesetzt werden kann.

### Aspekt Schraubverbindungssystem mit Zusatzmodul

Entsprechend weiteren Ausführungsbeispielen weist das Verbindungssystem ein auf das Schraubelement aufschraubbares, anschraubbares, aufsetzbares, aufsteckbares und/oder aufklemmbares Zusatzmodul auf, das eine integrierte Elektronik oder eine integrierte Elektronik mit Auswerteelektronik aufweist. Die Elektronik kann beispielsweise eine Auswerteelektronik für den sensorischen Schichtstapel der Unterlegscheibe sowie eine entsprechende Stromversorgung für den sensorischen Schichtstapel und/oder ein Funkmodul zum Übertragen der Messdaten nach extern aufweisen. Auch kann entsprechend weiteren Ausführungsbeispielen ein Energie-Harvester in dem Zusatzmodul vorhanden sein. Entsprechend Ausführungsbeispielen ist der sensorische Schichtstapel mit der Elektronik beziehungsweise der Auswerteelektronik des Zusatzmoduls über ein Kabel verbunden. Dieses Kabel kann entweder über eine Kontaktverbindung seitlich des Schraubenkopfes oder über eine Kabelschlaufe verlaufen.

### Aspekt Schraubverbindungssystem mit Zusatzmodul zum Aufstecken

Entsprechend Ausführungsbeispielen ist das Zusatzmodul auf den Schraubenkopf der Schraube aufsteckbar, das heißt also größer als die Schraube und ragt seitlich am Schraubenkopf entlang. Beispielsweise kann das Zusatzmodul eine Aussparung für den Kopf des Schraubelements aufweisen, die beispielsweise so tief wie der Schraubenkopf oder sogar tiefer als der Schraubenkopf ist. Diese Aussparung ermöglicht dann, dass das Zusatzmodul entsprechend Ausführungsbeispielen in Kontakt mit der Unterlegscheibe gebracht werden kann. Entsprechend weiteren Ausführungsbeispielen weist das Zusatzmodul eine weitere Aussparung, z. B. auf einer Hauptoberfläche gegenüberliegend zu der Hauptoberfläche, an welcher die Aussparung für den Schraubenkopf vorgesehen ist, auf. In diese weitere Aussparung kann die Elektronik/integrierte Auswerteelektronik integriert sein. Ebenso kann hier ein Energie-Harvester (Solar-Harvester oder Thermoelement-Harvester) vorgesehen sein.

Entsprechend Ausführungsbeispielen ist das Zusatzmodul als eine Art Kappe für den Schraubenkopf beziehungsweise das Schraubelement zu verstehen, erstreckt sich also fluchtend zu dem Schraubelement, das heißt also entlang einer Erstreckungsrichtung des Schraubelements (Verstärkungsrichtung = Schraubachse).

Ausführungsbeispielen dieses Aspekts der Erfindung liegt die Erkenntnis zugrunde, dass es durch eine dritte Komponente, nämlich das Zusatzmodul, möglich ist, die für den sensorischen Schichtstapel zu verwendende Elektronik zu beherbergen. Zu dieser Elektronik zählt beispielsweise die Funkelektronik und/oder die Auswerteelektronik. Ein Vorteil bei diesem Aspekt ist es weiterhin, dass Standardkomponenten, wie zum Beispiel DIN-Schrauben, verwendet werden können, so dass darunter auch die Ergonomie beim Einbau optimiert ist. Entsprechend Ausführungsbeispielen wird beispielsweise die Unterlegscheibe mit der Schraube verbunden und das Schraubelement festgezogen, wobei dann im Nachgang beispielsweise das Zusatzmodul aufgesteckt wird.

### Aspekt Schraubverbindungssystem mit drehmomentübertragenden Zusatzmodul (Zusatzmodul umfassend Eingriffnahmeabschnitte)

Entsprechend einem weiteren Ausführungsbeispiel wäre es auch denkbar, dass die drei Elemente Unterlegscheibe, Schraubelement und Zusatzmodul erst miteinander verbunden werden und dann gemeinsam eingeschraubt werden. Entsprechend Ausführungsbeispielen ist die Außenkontur der Unterlegscheibe fluchtend zu der Außenkontur des Zusatzmoduls angeordnet. Beide können beispielsweise ein Sechskant / eine Schlüsselweite aufweisen, so dass diese gemeinsam gedreht werden können. Entsprechend einem weiteren Ausführungsbeispiel ist das Schraubelement in das Zusatzmodul so eingebettet, dass eine Rotation des Zusatzmoduls eine Rotation des Schraubelements bewirkt.

Es wird also bei diesem Aspekt mit dem Zusatzmodul eine Unterscheidung zwischen einem Zusatzmodul, das nachher auf das Schraubelement aufgesteckt, aufgeklemmt oder aufgeschraubt wird und ein Zusatzmodul, das eine formschlüssige Verbindung mit dem Schraubelement eingeht, gemacht. Entsprechend einer ersten Variante erfolgt das Aufstecken des Zusatzmoduls nach dem Montieren der Schraube, was den Vorteil hat, dass herkömmliche Werkzeuge benutzt werden können.

Entsprechend dem Ausführungsbeispiel mit dem eingebetteten Schraubenkopf erfolgt die mechanische (drehmomentschlüssige) Übertragung des Zusatzmoduls mit dem Schraubelement vor dem Einschrauben. Beispielsweise kann das Schraubelement durch das Zusatzmodul hindurchgesteckt werden, so dass dann das Zusatzmodul mit den Drehmoment beaufschlagt wird, wobei das Zusatzmodul seine Rotation/sein Drehmoment auf das Schraubelement überträgt. Beispielsweise wäre es denkbar, dass das Zusatzmodul mit der Unterlegscheibe bereits im Vorfeld verbunden ist und dann die Schraube durch das Zusatzmodul beziehungsweise die Unterlegscheibe, die mit dem Zusatzmodul gekoppelt ist, hindurchgesteckt wird.

Entsprechend einem Ausführungsbeispiel weist das Zusatzmodul eine Aussparung mit ein oder mehreren Eingriffsflächen für das Schraubelement oder ein oder mehreren Eingriffsflächen für den Kopf des Schraubelements auf. Diese Eingriffsflächen können beispielsweise in Form einer Art Schlüsselweite / Sechskant ausgeführt sein. Im Allgemeinen können die Eingriffsflächen ausgebildet sein, um ein Drehmoment auf das Schraubelement zu übertragen. Entsprechend weiteren Ausführungsbeispielen ist die Aussparung des Zusatzmoduls sechseckig, so dass eine Sechskantschraube in das Zusatzmodul eingelegt werden kann und so bei Rotation des Zusatzmoduls in Rotation versetzt wird.

Entsprechend Ausführungsbeispielen ist die (radiale) Außengeometrie des aufsetzbaren Zusatzmoduls angepasst an die (radiale) Außengeometrie der Unterlegscheibe. Das ermöglicht, dass sowohl Zusatzmodul als auch Unterlegscheibe gleichzeitig gedreht werden können. Alternativ oder additiv kann die Außengeometrie des aufsetzbaren Zusatzmoduls fluchtend mit der Außengeometrie der Unterlegscheibe sein. Hintergrund liegt darin, dass das Zusatzmodul und das Unterlegscheibensystem Außenflächen aufweisen, die es ermöglichen mit einem Werkzeug die Schraube durch Rotation anzuziehen. Beispielweise weist die Außengeometrie eine Sechskantform auf, um mit einem Maul-, Ring- oder Steckschlüssel/Nuss das Schraubverbindungssystem durch Rotation anzuziehen. Entsprechend Ausführungsbeispielen ist das Zusatzmodul mit der Unterlegscheibe verbunden, z. B. verklebt oder verschweißt. Die Aspekte "fluchtende Außengeometrie" und "direkte Verbindung mit der Unterlegscheibe" sind bei beiden Ausführungen des Zusatzmoduls denkbar, wobei die drehmomentübertragende Ausführung hier bevorzugt wird. Das Verkleben kann gerade bei der nicht drehmomentübertragenden Version bevorzugter Weise nachher erfolgen.

Entsprechend einem weiteren Ausführungsbeispiel wird das Zusatzmodul auf die Unterlegscheibe aufgeschraubt, z. B. mittels separaten Schrauben. Alternativ oder additiv kann ein Aufklipsen mittels separater Klipse, z. B. seitlicher Klipse, erfolgen. Alle genannten Verbindungsarten (kleben, verschweißen, aufschrauben, aufklipsen) ermöglichen sowohl bei der drehmomentübertragenden als auch bei der nicht drehmomentübertragenden Ausführung des Zusatzmoduls, dass eine Pressung zwischen einer Elektronikkomponente des Zusatzmoduls und dem Schraubelement erfolgt. Hierdurch kann das Schraubelement bzw. das Element, in welches das Schraubelement eingeschraubt ist, als Temperaturquelle oder Temperatursenke verwendet werden. Entsprechend Ausführungsbeispielen weist das Zusatzmodul einen Thermogenerator auf, der mit dem Schraubmodul in Kontakt ist (z. B. auf das Schraubelement aufgepresst wird), um eine thermisch leitfähige Verbindung herzustellen. Der Thermogenerator kann beispielsweise die Schraube als Temperaturquelle oder Temperatursenke verwenden und so aufgrund eines Temperaturhubs zwischen einer Oberfläche des Zusatzmoduls und dem Schraubelement eine elektrische Energie generieren. Entsprechend einem Ausführungsbeispiel weist das Zusatzmodul Kühlelemente auf. Alternativ können die Kühlelemente durch eine Oberfläche des Zusatzmoduls, z. B. eine radiale Oberfläche, geformt sein. Dadurch wird die Oberfläche des Kühlelements vergrößert.

Entsprechend einem Ausführungsbeispiel weist das Zusatzmodul eine gedrehte Kabelführung, z. B. eine seitliche Kabelführung oder eine Kabelführung im Bereich der Kontaktfläche zu der Unterlegscheibe, auf. Durch diese Kabelführung ist die Elektronik des Zusatzmoduls mit der Sensorschicht verbindbar. Entsprechend einem weiteren Ausführungsbeispiel ist die Sensorschicht mit einer Elektronik über ein externes oder ein externes verbindbares (steckbares) Kabel verbindbar. Entsprechend weiteren Ausführungsbeispielen wäre es auch denkbar das Zusatzmodul durch eine im Zusatzmodul und entsprechend im Unterlegscheibensystem integrierte Steckerverbindung die Module elektrisch zu verbinden.

Ein Vorteil des Zusatzmoduls besteht darin, dass herkömmliche Schrauben, die hinsichtlich Belastung erprobt und zertifiziert sind, verwendet werden können und gleichzeitig elektrische Komponenten, wie zum Beispiel Energie-Harvester und/oder Auswerteelektronik/Funkelektronik, in das Zusatzmodul integriert werden können.

Der Vollständigkeit halber sei darauf hingewiesen, dass das Zusatzmodul neben der Elektronik /Auswerteelektronik auch ein Funkmodul und/oder eine Batterie und/oder eine Solarzelle und/oder einen anderen Energie-Harvester aufweisen kann.

Weitere Ausführungsbeispiele beziehen sich auf ein Verfahren zur Herstellung einer Schraubverbindung mittels eines Schraubverbindungssystems. Bei einem Ausführungsbeispiel wird ein Schraubverbindungssystem mit einem drehmomentübertragenden Zusatzmodul eingesetzt. Dieses umfasst die folgenden Schritte:
- Bereitstellen der Unterlegscheibe;
- Einlegen des Schraubelements;
- Verbinden, Verkleben oder Verschweißen der Unterlegscheibe mit dem Zusatzmodul;
- ; und
- Anziehen des Schraubelements durch Übertragen eines Drehmoments auf das Schraubelement mittels des Zusatzmoduls und der Unterlegscheibe.

Verfahren kann ferner den Schritt der Integration Elekronik und Energieversorgung, z.B. Energy Harvesting Komponenten aufweisen, z.B. vor dem Verbinden, Verkleben oder Verschweißen der Unterlegscheibe mit dem Zusatzmodul..

Ein weiteres Ausführungsbeispiel bezieht sich auf das Herstellen einer Schraubverbindung mittels eines Verbindungssystems unter Verwendung eines Zusatzmoduls, das aufgesteckt wird. Dieses Verfahren umfasst die Schritte:
- Bereitstellen der Unterlegscheibe;
- Einschrauben des Schraubelements unter Verwendung der Unterlegscheibe;
- Aufsetzen des Zusatzmoduls unter Verwendung einer Klemm- oder Schraubverbindung (Das Zusatzmodul enthält in diesem Fall beispielsweise Elektronik und Energieversorgung).

Nachfolgend werden Ausführungsbeispiele der vorliegenden Erfindung anhand der beiliegenden Zeichnungen erläutert. Es zeigen:
- Fig. 1: eine schematische Darstellung einer Unterlegscheibe gemäß einem Basisausführungsbeispiel;
- Fig. 2a: eine schematische Darstellung eines Schraubverbindungssystems mit einem aufsteckbaren Zusatzmodul gemäß einem Ausführungsbeispiel;
- Fig. 2b: eine schematische Darstellung eines Schraubverbindungssystems mit einem drehmomentübertragenden Zusatzmodul gemäß einem Ausführungsbeispiel;
- Fig. 3a-c: zeigen schematische Darstellungen eines Zusatzmoduls;
- Fig. 4a-d: zeigen schematische Darstellungen einer Unterlegscheibe in einer 3D-Ansicht gemäß Ausführungsbeispielen;
- Fig. 4e: zeigt eine schematische Schnittdarstellung durch ein Zusatzmodul in Kombination mit einer Unterlegscheibe gemäß einem weiteren Ausführungsbeispiel;
- Fig. 4f-h: zeigen schematische Darstellungen einer Kombination von Zusatzmodul mit Schraube und Unterlegscheibe in drei verschiedenen Expositionsdarstellungen der Unterlegscheibe gemäß Ausführungsbeispielen;
- Fig. 5: zeigt ein schematisches Flussdiagramm zur Illustration der Montage einer Schraube unter Verwendung eines drehmomentübertragenden Zusatzmoduls gemäß Ausführungsbeispielen;

- Fig. 6a-i: zeigen schematische Darstellungen eines Schraubverbindungssystems mit einer Unterlegscheibe und einem aufsteckbaren Zusatzmodul in 3D-Darstellungen (a-d, h, g, j, k, I, n, o, p) sowie Detailansichten (m, e, f) und einer Schnittdarstellung (i);
- Fig. 6j-p: zeigen schematische Darstellungen in einer 3D-Ansicht zur Illustration eines Klipsmechanismus für das Zusatzmodul gemäß Ausführungsbeispielen;
- Fig. 7: zeigt ein schematisches Flussdiagramm zur Illustration des Montageverfahrens eines Schraubverbindungssystems mit einem aufsteckbaren Zusatzmodul;
- Fig. 8a-f: zeigen schematische Darstellungen eines Schraubverbindungssystems mit aufklipsbarem Zusatzmodul gemäß Ausführungsbeispielen; und
- Fig. 9a-d: zeigen schematische Detaildarstellungen zu Schraubverbindungssystemen gemäß weiteren Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar beziehungsweise austauschbar ist.

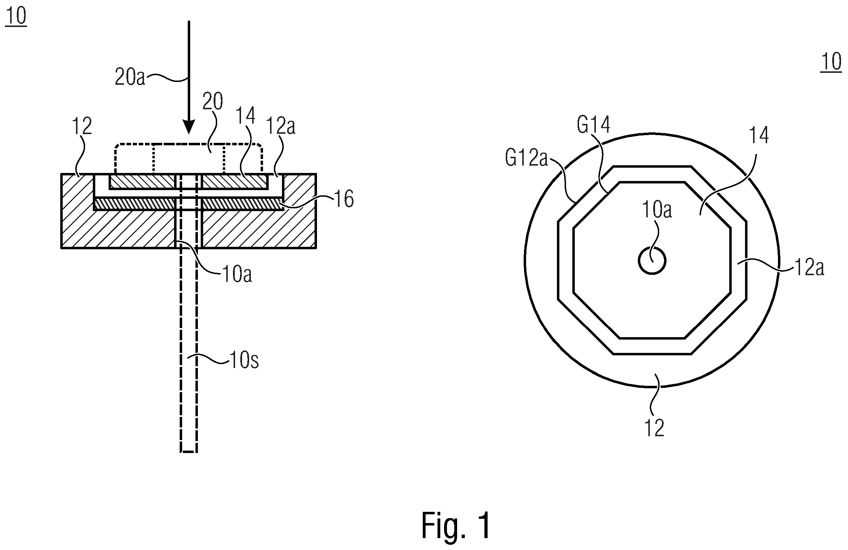

Fig. 1 zeigt ein Unterlegscheibenpaket bzw. eine Unterlegscheibe 10 in zwei verschiedenen Ansichten, nämlich einer Schnittdarstellung sowie einer Draufsicht. Das Unterlegscheibenpaket bzw. die Unterlegscheibe 10 weist ein Trägerelement 12 und ein Gegenelement 14 sowie ein sensorisches Schichtsystem 16 auf. Beispielsweise weist das Trägerelement 12 eine Ausnehmung 12a auf, in welche das Gegenelement 14 eingelegt ist. Entsprechend Ausführungsbeispielen ist die Ausnehmung 12a so gestaltet, dass diese mit der Außenkontur des Gegenelements 14 ein Formschluss ausbildet. Beispielsweise kann die Innengeometrie der Ausnehmung 12a eine Sechskantform aufweisen, während die Außenkontur des Gegenelements 14 einen gleich großen oder bevorzugter Weise einen etwas kleineren Sechskant aufweist. Selbstverständlich sind entsprechend Ausführungsbeispielen auch andere Konturen, wie zum Beispiel eine Dreiecksform, Vierecksform oder Vielzahlzahnform denkbar. Auch eine ovale Kontur wäre möglich. Dadurch, dass die Toleranzen des Gegenelements 14 kleiner oder minimal kleiner (Toleranzgruppe H7/g6, z. B. 1 % kleiner oder 5 % kleiner (allgemein im Bereich zwischen 0,1 % und 10 % kleiner, bezogen auf den Durchmesser)) ist, ist eine Bewegung des Gegenelements 14 gegenüber dem Trägerelement entlang der Schraubachse 20a möglich, während eine Rotation um die Schraubachse begrenzt ist beziehungsweise vermieden wird. Diese Beschränkung der Rotation wird durch den Formschluss beziehungsweise allgemein durch das Zusammenspiel der Geometrie g12a des Trägerelements und g14 des Gegenelements erreicht.

Nachdem nun die Geometrie von Träger und Gegenelement erläutert wurde, wird auf ein weiteres essenzielles Merkmal eingegangen. Die Unterlegscheibe weist zwischen dem Trägerelement und dem Gegenelement ein sensorisches Schichtsystem 16 auf. Dieses Schichtsystem 16 kann als Schichtstapel oder als Einzelschicht ausgeführt sein und umfasst beispielsweise eine kraftsensierende oder vibrationssensorische Schicht. Entsprechend Ausführungsbeispielen kann das sensorische Schichtsystem 16 beziehungsweise die Schicht auf dem Trägerelement 12, z. B. in der Ausnehmung 12a, angeordnet / positioniert sein oder auch auf dem Gegenelement 14 oder zwischen Elementen 12 und 14 angeordnet sein. Entsprechend weiteren bevorzugten Ausführungsbeispielen wäre es auch denkbar, dass eine zusätzliche Trägerschicht als Teil der des sensorischen Schichtsystems 16 vorgesehen ist. Insofern wird die Sensorschicht des sensorischen Schichtsystems bei dieser bevorzugten Variante auf ein zusätzlichen Element aufgebracht und formt so das Schichtsystem 16, das auch als Sensorscheibe bezeichnet wird.

Das sensorische Schichtsystem 16 ist entsprechend Ausführungsbeispielen ausgebildet, um eine zwischen Trägerelement und Gegenelement vorherrschende Kraft, insbesondere entlang der Schraubachse 20a, zu sensieren und entsprechend ein Sensorsignal auszugeben, das die Kraft beziehungsweise die Druckkraft oder eine Vibration (Variation der Drucckraft bzw. Kraft über Zeit) beschreibt. Insofern ist es also vorteilhafterweise möglich, eine auf die Unterlegscheibe 10 einwirkende Kraft entlang der Schraubachse 20a zu detektieren, das heißt also eine Pressung auf die Unterlegscheibe 10. Diese kann entsprechend Ausführungsbeispielen durch eine Schraube 20 ausgeübt werden, die durch eine Öffnung 10o der Unterlegscheibe 10 hindurchgesteckt ist. Die Öffnung 10o erstreckt sich durch die drei Komponenten 12, 14 und 16, so dass der Schraubenschaft 10s hindurchragen kann.

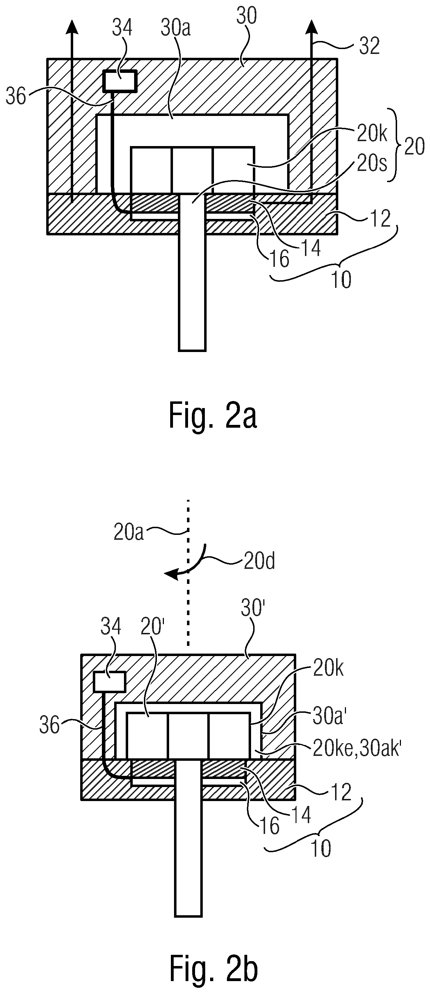

Die Kombination der optionalen Schraube 20 mit dem Unterlegscheibenpaket bzw. der Unterlegscheibe 10 stellt ein Schraubverbindungssystem dar. Dieses Schraubverbindungssystem kann durch ein Zusatzmodul, z. B. in Form einer Kappe, erweitert werden, wie nachfolgend Bezug nehmend auf Fig. 2a und 2b erläutert wird. Fig. 2a zeigt eine Schraube 20 mit einem Schraubenschaft 20s und einem Schraubenkopf 20k. Beispielsweise kann es sich bei der Schraube um eine Sechskantschraube handeln, wobei auch weitere Varianten zum Einsatz kommen können. Der Schraubenschaft ragt durch die Scheibe 10 mit den Komponenten 12, 14 und 16 hindurch. Das Unterlegscheibenpaket 10 kann beispielsweise wie im Zusammenhang mit Fig. 1 erläutert ausgeführt sein. Das Schraubverbindungssystem gemäß der Ausführung aus Fig. 2a kann ferner um das Zusatzmodul 30 erweitert sein. Dieses Zusatzmodul 30 ist auf den Schraubenkopf 20k aufgesetzt, aufgesteckt oder aufgeklemmt. Hierzu weist in diesem Ausführungsbeispiel beziehungsweise allgemein in entsprechenden Ausführungsbeispielen das Zusatzmodul 30 eine Aussparung 30a auf. In diesem Ausführungsbeispiel ist die Aussparung 30a so gestaltet, dass der gesamte Schraubenkopf 20k in dieser Aussparung 30a umschlossen wird. Infolgedessen liegt das Zusatzmodul 30 mit seiner ersten Hauptoberfläche, in welcher auch die Aussparung 30a angeordnet ist, auf der Unterlegscheibe 10 auf.

Wie eingangs erwähnt, kann das Zusatzmodul 30 aufgeklemmt, aufgeklipst oder auch aufgeschraubt sein. Hier ist exemplarisch eine aufgeschraubte Variante illustriert, die mittels zusätzlicher Schrauben 32 das Zusatzmodul 30 befestigt. In diesem Ausführungsbeispiel wird eine Befestigung des Zusatzmoduls 30 an die Unterlegscheibe 10 realisiert.

Entsprechend Ausführungsbeispielen weist das Zusatzmodul eine Elektronik, wie zum Beispiel eine Auswerteelektronik, auf. Diese ist exemplarisch oberhalb der Ausnehmung 30a angeordnet und mit dem Bezugszeichen 34 versehen. Die Elektronik/Auswerteelektronik dient zur Auswertung der Sensorsignale / des sensorischen Schichtsystems 16 (mit ein oder mehreren (sensorischen und nichtsensorischen Schichten). Entsprechend Ausführungsbeispielen kann eine Kabelverbindung 36 zwischen dem Element 34 und der sensorischen Schicht 16 beziehungsweise dem sensorischen Schichtsystem 16 angeordnet sein. Hier ragt die Kabelverbindung 36 durch die Ausnehmung 30a hindurch, wobei das auch anders ausgeführt sein kann. Entsprechend weiteren Ausführungsbeispielen kann die Elektronik 34 durch weitere Komponenten, wie zum Beispiel eine Energieversorgung, einen Energie-Harvester, eine Solarzelle, einen Thermo-Harvester, erweitert sein. Entsprechend weiteren Ausführungsbeispielen wäre auch eine Erweiterung um ein Funkmodul denkbar, so dass die Sensordaten nach extern übermittelt werden können.

Vorteilhaft bei diesem Ausführungsbeispiel ist, dass ein herkömmliche Schraube 20 mit der um die Sensorfunktionalität erweiterten Unterlegscheibe 10 verwendet werden kann, wobei durch das Zusatzmodul gleich eine Auswertung der Sensordaten erfolgen kann. Das aufsteckbare Zusatzmodul ermöglicht so jeder Schraube, z. B. bei einem Schraubenverbund, z. B. den Brückenbau zu überwachen, wobei da platzsparend das Zusatzmodul aufgesteckt wird. Häufig ist bei derartigen Schraubverbindungssystemen die Montageergonomie besonders relevant. Aus ergonomischer Sicht ist dieses Ausführungsbeispiel besonders vorteilhaft, da Standardverbindungstechniken verwendet werden und nur nachher das Zusatzmodul kontaktiert und/oder aufgesteckt wird.

Fig. 2b zeigt eine weitere Optimierung eines Zusatzmoduls 30'. Dieses kann ebenfalls auf die Schraube 20 beziehungsweise insbesondere den Schraubenkopf 20k aufgesteckt werden und zwar so, dass ein Drehmoment von dem Zusatzmodul 30' auf den Schraubenkopf 20k übertragbar ist. Hierzu weist das Zusatzmodul 30' eine Ausnehmung 30a' auf, die eine zu der Geometrie des Schraubenkopfes 20k angepasste Geometrie aufweist. Wenn man beispielsweise von einer Sechskantschraube 20 ausgeht, kann die Ausnehmung 30a' ebenfalls sechseckig ausgeführt sein und weist ungefähr eine vergleichbare Größe auf. Bevorzugter Weise ist die Ausnehmung 30a' gleich groß oder minimal größer (z. B. 5 % größer, bezogen auf den Durchmesser) oder allgemein im Bereich von 0,1 bis 10 % größer. Hierdurch entsteht dann eine Eingriffnahme zwischen dem Zusatzmodul 30' und dem Schraubenkopf 20k, so dass bei einer Rotation des Zusatzmoduls 30' der Schraubenkopf 20k beziehungsweise die Schraube rotiert wird. Die Eingriffnahmeabschnitte sind mit den Bezugszeichen 20ke und 30ak' gekennzeichnet. Infolgedessen erfolgt also eine Übertragung der Drehung (vgl. Drehung 20d) um die Schraubachse. Das ermöglicht vorteilhafterweise, dass das Zusatzmodul 30' vor Einschrauben der Schraube 20 aufgesetzt werden kann.

Entsprechend Ausführungsbeispielen kann die Unterlegscheibe 20 mit der sensorischen Einheit auch vorher mit dem Zusatzmodul 30' und der Schraube 20 zusammengesetzt werden. Beispielsweise ist die Ausnehmung 30a' so dimensioniert, dass der Schraubenkopf 20k in seiner Höhe aufgenommen wird. Somit befinden sich wieder Schraubenkopf und Unterlegscheibe 10 in Kontakt. Beispielsweise kann ein Aufkleben des Zusatzmoduls 30' auf die Unterlegscheibe 10 erfolgen.

Entsprechend Ausführungsbeispielen weist das Zusatzmodul 30' auch eine Elektronik oder Auswerteelektronik 34 auf, die z. B. über eine Kabelverbindung 36 mit der Sensorschicht 16 verbunden ist.

An dieser Stelle sei angemerkt, dass sowohl beim Ausführungsbeispiel aus Fig. 2a als auch beim Ausführungsbeispiel aus Fig. 2b das Zusatzmodul 30 beziehungsweise 30' so mit der Unterlegscheibe 10 in Eingriff ist, dass hier die Kraft entlang der Schraubachse 20a nicht beeinflusst wird. Beim Ausführungsbeispiel aus Fig. 2a ist der Schraubenkopf 20k nicht mit dem Zusatzmodul 30 in Berührung, so dass nur auf der Unterseite des Schraubenkopfes 20k ein kraftschlüssiger Kontakt zu dem Gegenelement 12 resultiert, wobei das Trägerelement 14 mit einem Werkstück (nicht dargestellt) in Kontakt sein kann. Bei dem Ausführungsbeispiel aus Fig. 2b können auch nach dem Anziehen die Kontaktflächen/Eingriffnahmeabschnitte 20ke, 30ak' so ausgeführt sein, dass keine Beeinflussung in Kraftrichtung entlang der Achse 20a erfolgt. Hierbei kann wiederum der Schraubenkopf 20k mit dem Gegenelement 12 in Eingriff sein, wobei dann das Trägerelement 14 mit dem zu befestigenden Werkstück in Kontakt ist und auch mit dem Zusatzmodul 30'. Aufgrund der reduzierten Kontaktflächen wird hier allerdings nicht der Kraftfluss behindert.

An dieser Stelle sei angemerkt, dass der Eingriffnahmebereich zwischen 20k und 30a' seitlich, das heißt radial, über die Kontaktflächen 20ke beziehungsweise 30ak' erfolgt.

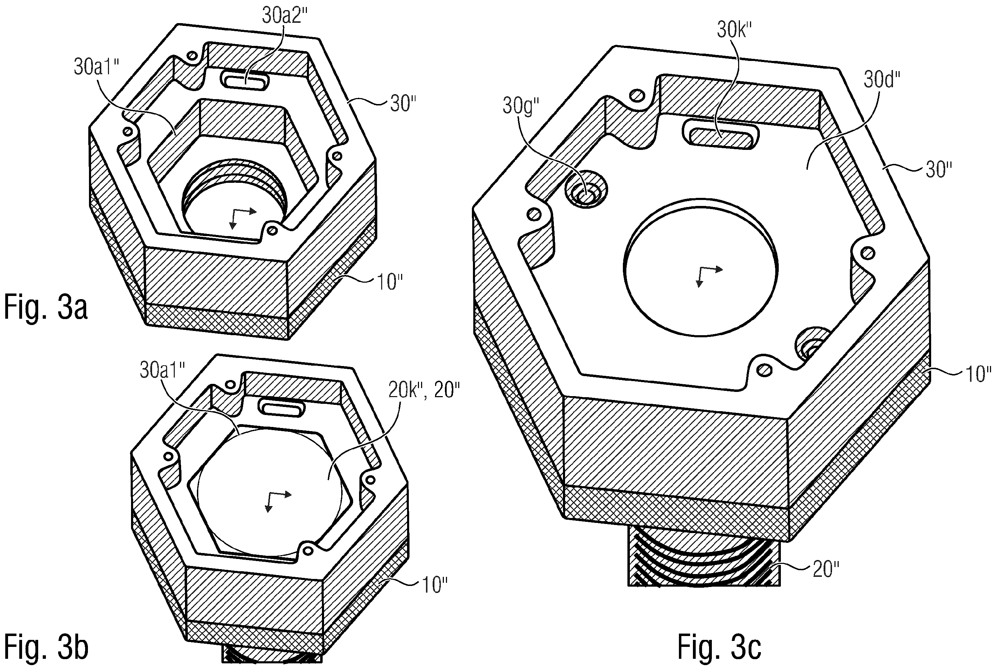

Nachfolgend wird Bezug nehmend auf Fig. 3 ff. das Schraubverbindungssystem und insbesondere optionale Aspekte des Schraubverbindungssystems sowie der zugehörigen Komponenten erläutert.

Fig. 3a-c zeigen ein Schraubverbindungssystem mit einer Schraube 20", einer Unterlegscheibe 10" sowie einem Zusatzmodul 30". In Fig. 3a ist die Kombination aus Unterlegscheibe 10" und Zusatzmodul 30" dargestellt. Diese können beispielsweise miteinander verklebt sein. Entsprechend einem Ausführungsbeispiel weisen sowohl Zusatzmodul 30" als auch Unterlegscheibe 10" eine vergleichbare Form, z. B. in Form einer Schlüsselweite, auf. In diesem Ausführungsbeispiel sind die Außenkonturen der Unterlegscheibe 10" sowie des Zusatzmoduls 30" fluchtend. An dieser Stelle sei angemerkt, dass das Element 30" beispielsweise als Metallgehäuse ausgeführt sein kann.

Bezüglich dem Schlüsselweitensollmaß der Schraube sei angemerkt, dass dieses so gewählt ist, dass das Metallgehäuse 30" das Drehmoment beim Einschrauben auf die Schraube 20" beziehungsweise Schraubenkopf 20k" übertragen kann. Das Prinzip ist ähnlich wie bei einem Steckschlüssel und Schraubenkopf. An dieser Stelle sei angemerkt, dass die Freiheitsgrade in axialer Richtung nicht eingeschränkt werden sollen, so dass hier entsprechende Passungen/Toleranzen so gewählt sind.

Entsprechend Ausführungsbeispielen weist das Zusatzmodul 30" eine erste und eine zweite Aussparung auf, die hier mit dem Bezugszeichen 30a1" und 30a2" versehen sind. Die erste Aussparung 30a1" befindet sich auf der Seite der Unterlegscheibe 10" und hat beispielsweise eine sechseckige Form, so dass ein Schraubenkopf eingelegt werden kann. Das ist in Fig. 3b dargestellt. An dieser Stelle sei angemerkt, dass die Aussparung 30a1" sich durch das gesamte Bauteil in der Breite des Schraubenkopfes 20k" erstrecken kann und die Unterseite des Schraubenkopfes 20k" beispielsweise durch die Unterlegscheibe 10" gehalten wird.

Die Ausführung des Zusatzmoduls 30" aus Metall hat den Vorteil, dass hier eine gute Temperaturabführung möglich ist. Wenn man beispielsweise davon ausgeht, dass ein Thermo-Harvester im Zusatzmodul 30" vorgesehen ist, kann hier so die Temperatur effektiv abgeführt werden, z. B. als Temperatursenke oder Temperaturquelle.

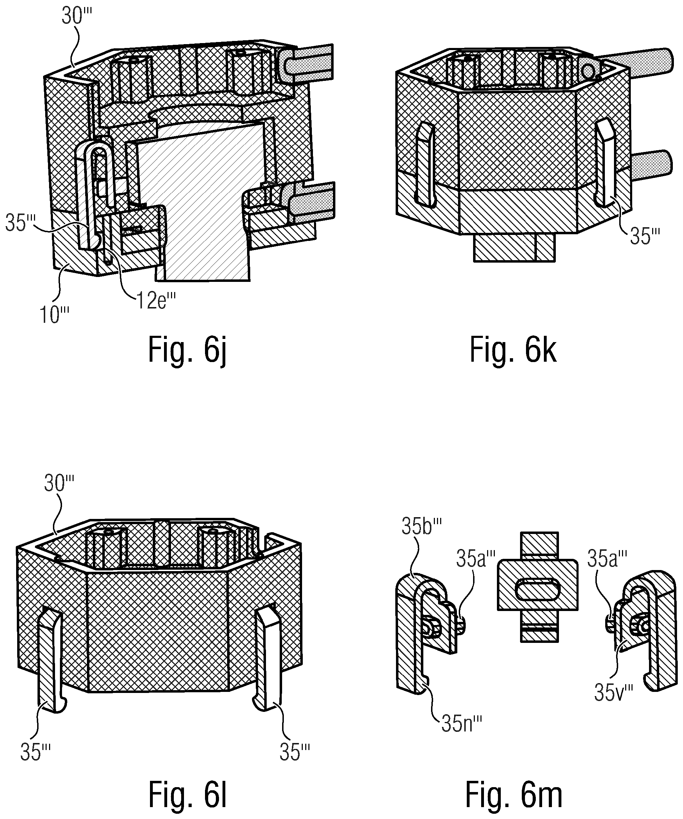

An dieser Stelle sei angemerkt, dass hier auch eine andere Temperaturquelle beziehungsweise Temperatursenke beispielsweise eine Schraube formen kann. Vorteilhaft ist deshalb eine Variante, bei welcher der Thermogenerator so mit der Schraube verbunden ist, dass dieser als Temperatursenke oder Temperaturquelle dient. Bezug nehmend auf Fig. 6j-p wird ein Aufklipselement 35‴ erläutert werden. Durch dieses ist es möglich, einen Thermogenerator fest auf eine Schraube aufzuklipsen. Ein derartig festes Aufklipsen ist auch entsprechend weiteren Ausführungsbeispielen bei Verkleben oder ähnlichem möglich.

In Bezug auf dieses Ausführungsbeispiel beziehungsweise im Allgemeinen sei angemerkt, dass der Thermogenerator so in das Zusatzmodul montiert ist, dass die der Schraube abgewandte Seite des Thermogenerators eine thermisch leitfähige Verbindung zum Zusatzmodul hat. Der thermische Widerstand des Zusatzmoduls sollte dabei möglichst gering sein, was zum Beispiel durch thermisch gut leitendes Metall gewährleistet werden kann. Das Zusatzmodul und die Schraube mit Unterlegscheibensystem sind entsprechend Ausführungsbeispielen durch eine thermisch schlecht leitendes Element (Isolator) thermisch von-einander entkoppelt.

Wie hier Bezug nehmend auf Fig. 3b zu erkennen ist, ist der Schraubenkopf 20k" in die Ausnehmung 30a1" eingelassen. In diesem Ausführungsbeispiel beträgt die Schlüsselweite beispielsweise 27 mm für den Schraubenkopf 20k", wobei auch unterschiedliche Toleranzen (+4,1 und +0,05) Verwendung finden, so dass eine Drehbandübertragung erfolgt, der Schraubenkopf 20k" aber gut in die Ausnehmung 30a1" eingebracht werden kann und es auch hier nicht zum Verklemmen kommt. Entsprechend Ausführungsbeispielen schließt der Schraubenkopf 20k" plan mit einem ebenen Bereich der Ausnehmung 30a2" ab. Dieser Bereich kann beispielsweise mittels eines Deckels 30d" abgedeckt werden, so dass dann in der Ausnehmung 30a2" ein Freiraum für eine Elektronik oder ähnlichem geschaffen wird. Anzumerken ist hierbei, dass der Deckel 30d" beispielsweise mittels Schrauben mit dem Zusatzmodul verbindbar ist. Die Schraubenlöcher sind mit dem Bezugszeichen 30s" versehen. Darüber hinaus ist hier auch eine Kabeldurchführung 30k" vorgesehen, über welche die Elektronik in dem Bereich 30a2" mit der Sensorschicht verbindbar ist. Die Kabeldurchführung 30k" erstreckt sich beispielsweise längs durch das gesamte Bauteil 30".

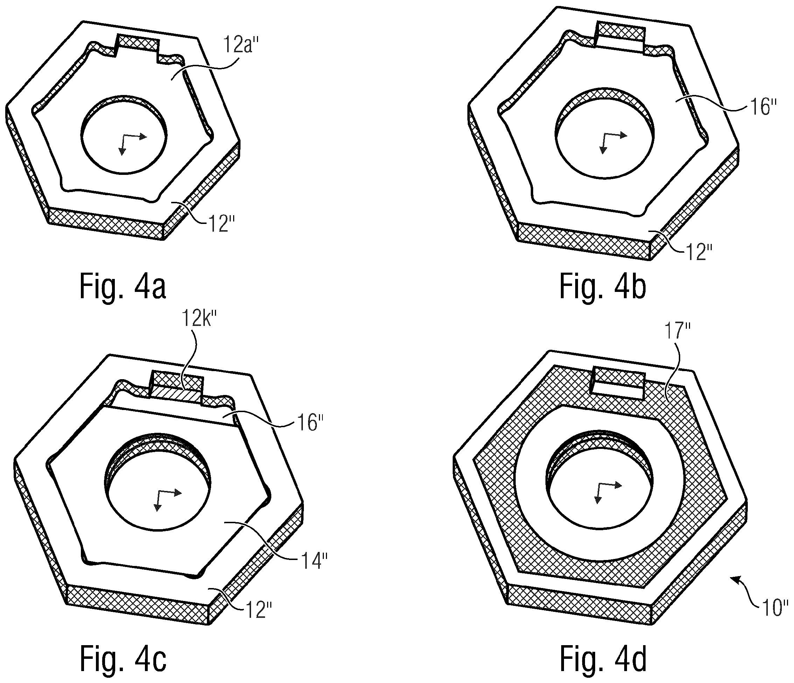

Nachfolgend wird Bezug nehmend auf Fig. 4a-d der Aufbau der Unterlegscheibe 10" erläutert. Diese weist ein Trägerbett 12" auf. Wie zu erkennen ist, ist die Unterlegscheibe 10" hier sechseckig ausgeführt und kann hinsichtlich der Außendimensionen die gleichen Außendimensionen haben wie das Zusatzmodul 30". Die Unterlegscheibe weist eine Ausnehmung 12a" auf (vgl. Fig. 4a), in die die Sensorschicht beziehungsweise das sensorische Schichtsystem 16" eingelegt werden kann (vgl. Fig. 4b). Mit dem Gegenelement 14" wird dann die Sensorschicht 16" eingebettet (vgl. Fig. 4c-d). Ferner kann durch das Element 17" das Gegenelement 14" gesichert und abgedichtet werden. Wie zu erkennen ist, ist hier auch eine Öffnung 12k" vorgesehen, über welche das Sensorelement 16" kontaktiert werden kann. Bei dem Schraubverbindungssystem kann also eine weitere Scheibe im Eingriff sein, wie in Fig. 4d mit dem Element17" gezeigt ist.

Bezüglich der Dimensionierung sei angemerkt, dass das Trägerelement eine Aussparung 12a" mit beispielsweise 35 mm aufweist, während das Gegenelement 14" den gleichen Durchmesser von 30 mm hat. Unterschiedlich sind hier auch die Toleranzen. Beispielsweise kann eine Paarung H7/g6 gewählt werden, so dass der Freiheitsgrad in axialer Richtung nicht behindert wird.

Bezüglich der Dimensionierung des Schlüsselweitensollmaßes beim Gehäuse 30" (Unterlegscheibe Innensechskant) und Unterlegscheibe 10" (Außensechskant) sei Folgendes angemerkt. Das Gehäuse 10" (Unterlegscheibenpaket) überträgt das Drehmoment auf die Gegenscheibe 12" und die Sensorscheibe 16". Eine Relativbewegung zwischen Gegenscheibe 12" und Sensorscheibe 16" sollte möglichst gering sein. Durch die richtige Wahl der Toleranzen wird ein Verklemmen zwischen der Unterlegscheibe 10" (Außenfläche) und der Innenfläche des Gehäuses 30" (Unterlegscheibenpaket) verhindert werden.

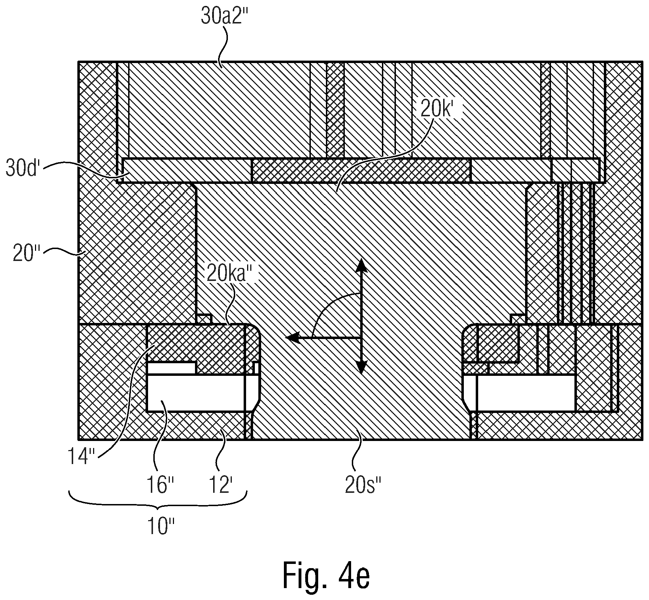

Bezug nehmend auf Fig. 4e werden noch einmal die Wirkflächen erläutert. Das Unterlegscheibenpaket 10" mit den Komponenten 12", 14" und 16" bildet eine Einheit, durch welche der Schraubenschaft 20s" hindurchragt. Im Bereich der Bohrung durch das Unterlegscheibenpaket 10" ist ausreichend Freiraum zu dem Schraubenschaft 20s" vorgesehen, so dass der Schraubenkopf 20k" nur über die am Schraubenkopf 20k" vorgesehene Auflagefläche 20ka" auf die Gegenscheibe 14" einwirkt. Hierbei ist der Durchmesser des Schraubenkopfes 20k" beziehungsweise der Auflagefläche 20ka" kleiner als der Durchmesser der Gegenscheibe 14", so dass die Kraft von der Schraube 20" über die Gegenscheibe 14" auf die Sensorscheibe 16" übertragen wird und hier die Messung nicht verfälscht werden kann. Bevorzugter Weise (aber nicht notwendigerweise) liegt das Zusatzmodul beziehungsweise das Gehäuse 20" des Zusatzmoduls auf der Trägerscheibe 12" auf, wobei Trägerscheibe 12" und Gegenscheibe 14" plan abschließen. Durch das Abzugsmoment der Schraube wird dann so der Kontakt beziehungsweise die Krafteinwirkung von dem Gehäuse 20" auf die Sensorscheibe 16" vermieden.

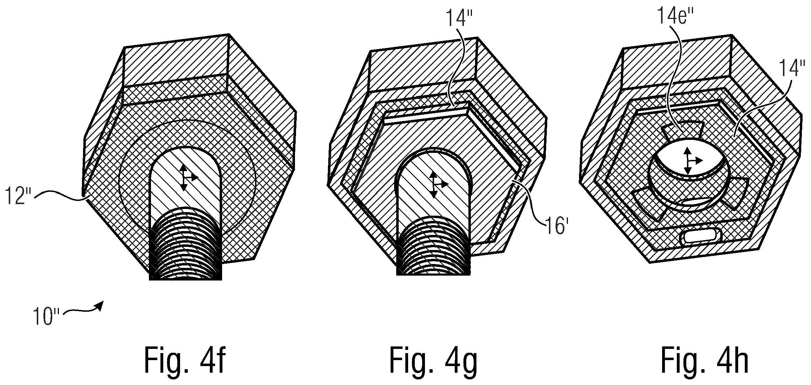

Im Zusammenhang mit Fig. 4f, g und h wird nun ein optionaler Aspekt der Gegenscheibe 14" erläutert. Fig. 4f zeigt in einer dreidimensionalen Darstellung die Unterlegscheibe 10" und hier insbesondere das Trägerelement 12" von unten. In Fig. 4g ist das Trägerelement 12" nicht dargestellt, so dass die Schichten 14" und 16" gezeigt sind, wobei in Fig. 4h die Trägerschicht 12" und Sensorschicht 16" nicht dargestellt sind, sondern nur die Gegenscheibe 14".

Wie in Fig. 4h zu erkennen ist, weist die Gegenscheibe 14" auf der der Sensorscheibe 16" zugewandten Seite Erhebungen 14e" (hier drei Erhebungen) auf. Diese haben eine definierte Größe, so dass die Krafteinleitung in die Sensorscheibe 16" optimiert wird.

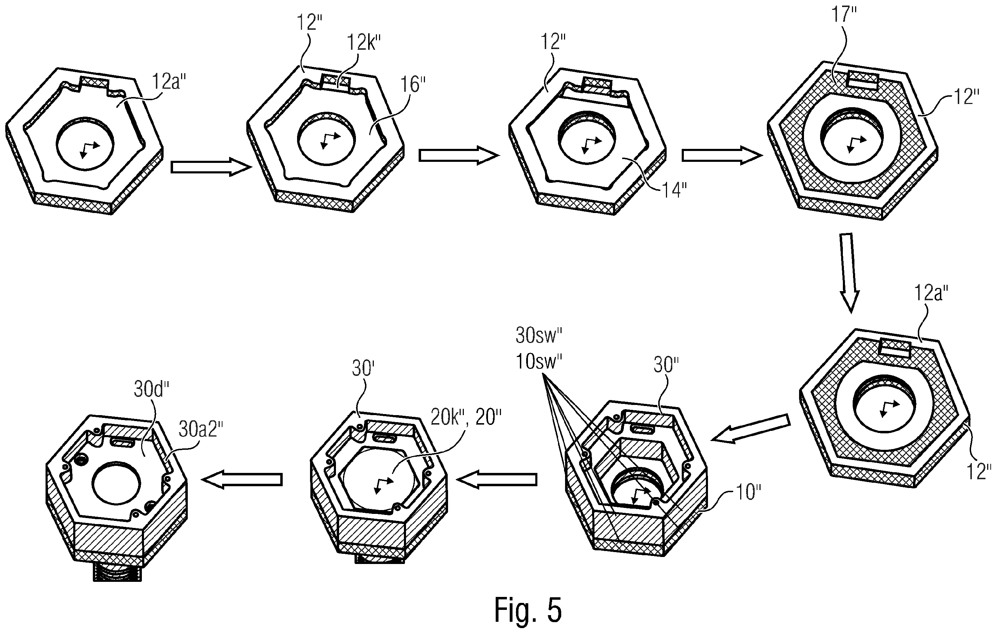

Nachfolgend wird Bezug nehmend auf Fig. 5 der Einbauvorgang beziehungsweise Zusammenbauvorgang von Unterlegscheibe 10", Zusatzmodul 30" und Schraube 20" erläutert.

Bei einem ersten Schritt wird die Trägerscheibe 12" bereitgestellt, so dass dann im nächsten Schritt die Sensorscheibe 16" eingelegt werden kann und die Kabel seitlich geführt werden können (vgl. Kabelführung 12k"). Als nächster Schritt erfolgt dann das Einsetzen der Gegenscheibe 14", die dann mit dem Deckblech 17" (optionales Element) verklebt wird. Nach der Positionierung des Deckblechs 17" und Aushärten des Klebstoffs erfolgt ein weiterer Klebstoffauftrag auf die freie Oberfläche des Elements 12". Diese Oberfläche ist hier mit dem Bezugszeichen 12o" markiert. Über diese Klebeverbindung soll dann der Metallkörper beziehungsweise allgemein der Körper des Zusatzmoduls 30" aufgeklebt werden. Hierfür erfolgen beispielsweise folgende Schritte: Kabel durch Öffnung im Metallgehäuse 30" führen; Metallgehäuse 30" aufsetzen und positionieren und gegebenenfalls mittels Gewichten erschweren, um das Aushärten zu verbessern. Die Flächen 30sw" beziehungsweise 10sw" formen die seitliche Schlüsselweite. Bevorzugter Weise fluchten die Flächen 30sw" und 10sw", so dass das Drehmoment bei der Endmontage mit Innensechskantsteckschlüssel auf beide Gehäuse 30" und 10" gleichmäßig übertragen werden kann.

Nach dem Element 30" und 10" kann die Schraube 20" eingesetzt werden. Die Größe der Schraube beziehungsweise insbesondere des Schraubenkopfes 20k" ist, wie oben erläutert, an die Ausnehmung 30a1" angepasst. In einem letzten Schritt kann dann eine Schutzscheibe 30d" in die Aussparung 30a2" eingesetzt werden, die einen Schutz für die Elektronik oder ähnlichem darstellt. Danach erfolgt das Einlegen der Elektronik sowie das Verschließen mit einer weiteren Deckplatte (nicht dargestellt).

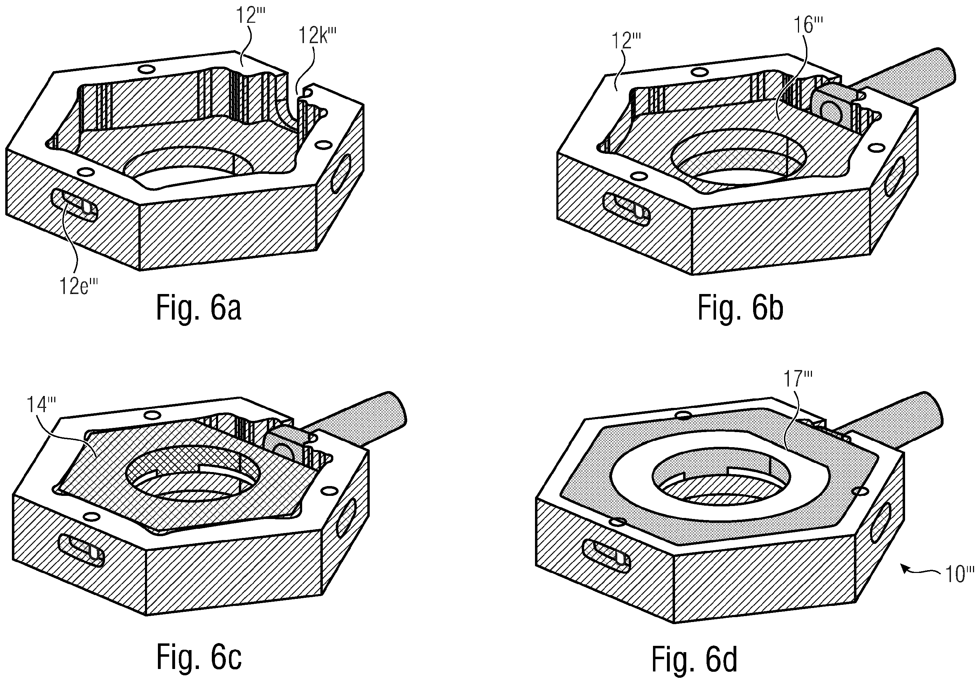

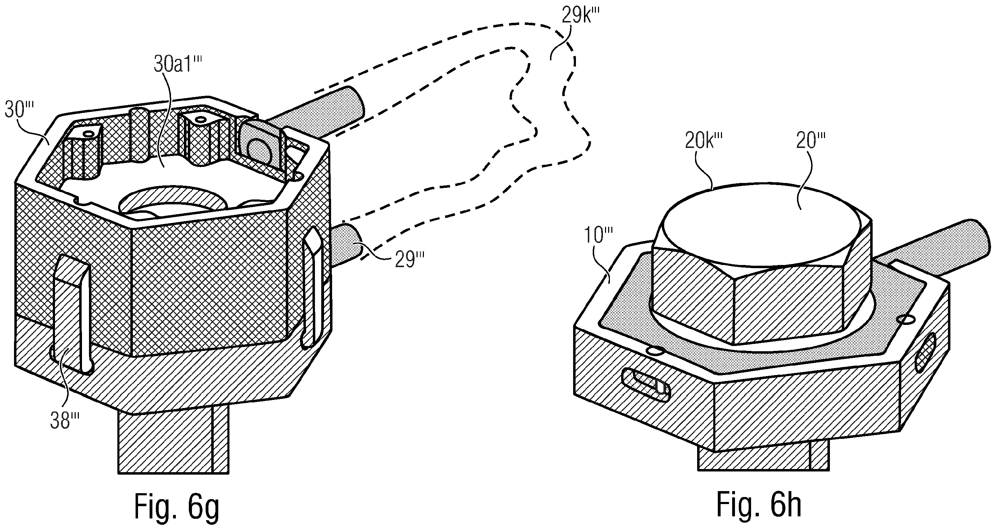

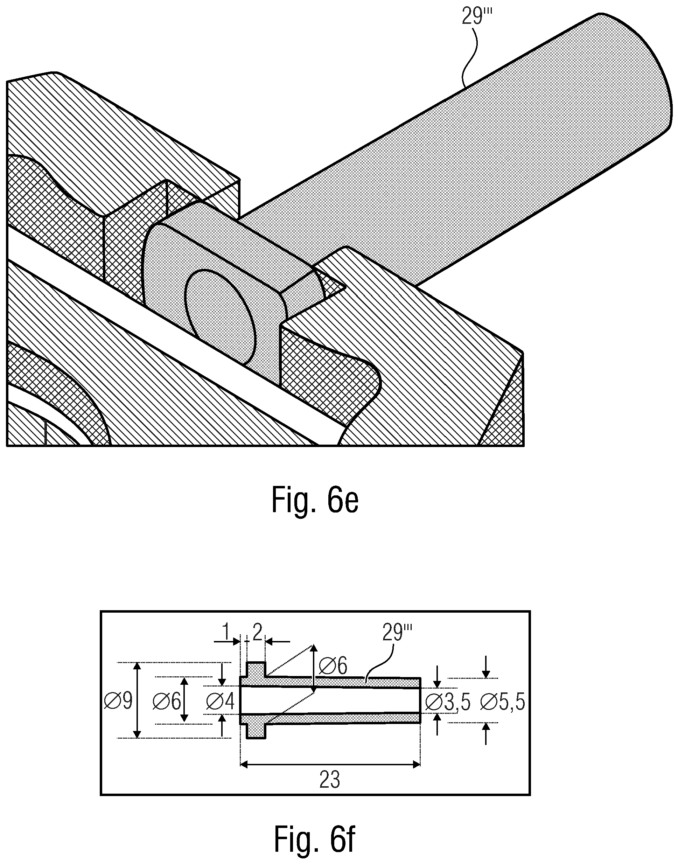

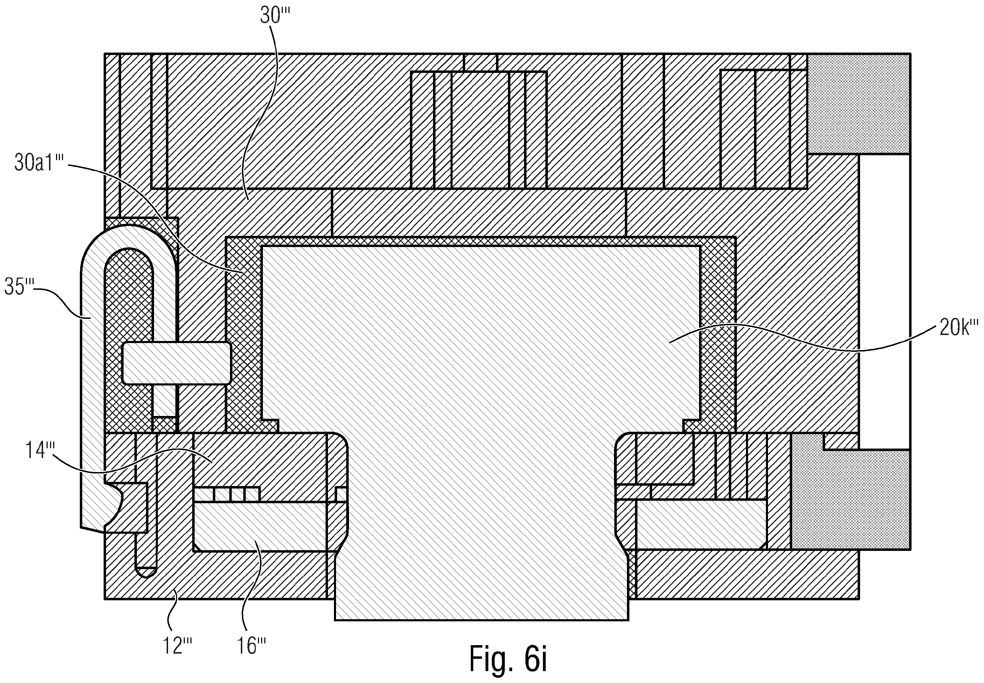

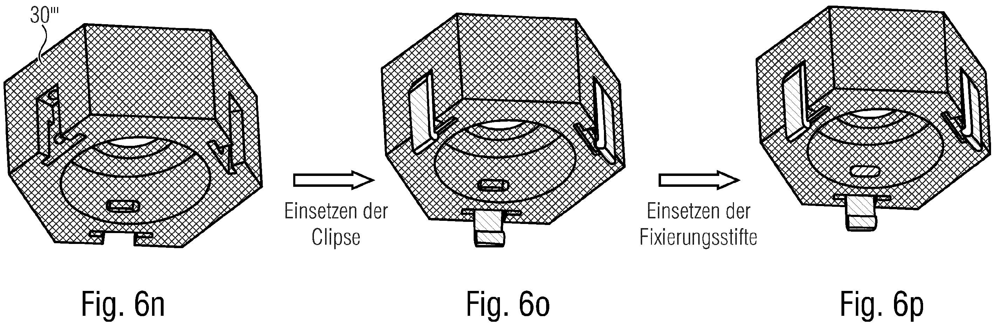

Bezug nehmend auf Fig. 6 wird nun eine alternative Variante erläutert.

Fig. 6a-d illustrieren eine Unterlegscheibe 10‴, die ebenfalls eine sechseckige Form aufweist. Die Unterlegscheibe besteht hier aus den drei Elementen: Trägerscheibe 12‴, Sensorscheibe 16‴, Gegenscheibe 14‴ sowie Deckscheibe 17‴. Der Aufbau ist wie beispielsweise im Zusammenhang mit Fig. 4a-d erläutert. Besonders hervorzuheben ist, dass hier eine seitliche Kabelausführung 12k‴ sowie Eingriffnahmeabschnitte 12e‴ vorhanden sein können. Über diese Kabelausführung 12k‴ wird über eine Kabeltülle 29‴ das Kabel rausgeführt. Dadurch ist es dann möglich, eine Elektronik, die sich in der Aussparung 30a2‴ (vgl. Fig. 6g) befindet, daran zu koppeln. Das zugehörige Kabel ist mit dem Bezugszeichen 29k‴ versehen.

Bevor das Zusatzmodul 30‴ aufgesetzt wird, wird, wie in Fig. 6h dargestellt, die Schraube 20‴ mit der Unterlegscheibe 10‴ verbunden. Hier kann die Schraube 20‴ direkt in einen Körper eingeschraubt werden, ohne dass das Zusatzmodul schon aufgesetzt ist. Durch das Kabel 29k‴ kann sich das Zusatzmodul 30‴ neben der Schraube befinden, so dass die Schraube 20‴ angezogen werden kann. In einem nächsten Schritt wird dann das Zusatzmodul 30‴ auf den Schraubenkopf 20k‴ aufgesetzt, wie in der Schnittdarstellung gut zu erkennen ist. Die Aussparung 30a1‴ ist in diesem Ausführungsbeispiel nicht zwingend an die Form des Schraubenkopfes 20k‴ exakt angepasst, sondern kann auch größer sein. Auch wäre eine runde Ausnehmung 30a‴ entsprechend dem maximalen Durchmesser des Schraubenkopfes 20k‴ denkbar. Aus entsprechenden Ausführungsbeispielen wird das Zusatzmodul 30‴ auf der Schraube durch einen Klips 35‴ denkbar. Dieser Klips 35‴ ist seitlich am Zusatzmodul 30‴ eingehängt und greift in die Eingriffnahmeabschnitte 12e‴ ein, um ein axiales Verrutschen des Zusatzmoduls 30‴ zu verhindern. Bei diesem Ausführungsbeispiel sind hier drei Klipse 35‴, das heißt an jeder der zweiten Seitenfläche der Schlüsselweite vorgesehen.

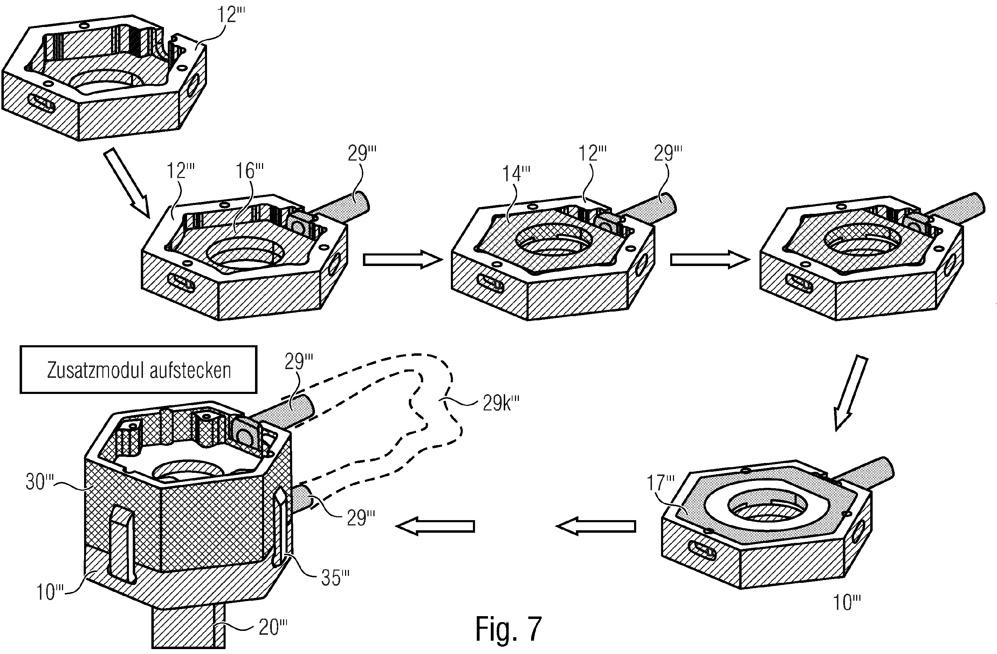

Ausgehend von dem Verbindungssystem aus Fig. 6 wird nun die Montage beziehungsweise der Zusammenbau anhand von Fig. 7 erläutert. In einem ersten Schritt wird das Trägerelement 12‴ bereitgestellt, so dass dann im Wechselschritt die Sensorscheibe 16‴ eingelegt werden kann. Das Kabel 29k‴ beziehungsweise die Kabeltülle 29‴ ragt dabei seitlich hinaus. Im nachfolgenden Schritt wird die Gegenscheibe 14‴ eingesetzt, wobei hierbei dann die Knickschutzhülle 29‴ gegebenenfalls eingeklebt wird. Im nachfolgenden Schritt wird das Deckblech 17‴ positioniert aufgeklebt, wodurch die Montage der Unterlegscheibe 10‴ beendet ist. Aufseiten des Zusatzmoduls wird das Kabel durch den Kabelschlauch beziehungsweise die Knickschutzhülle 29ʺʺ geführt, wobei der Kabelschlauch jeweils über die beiden Knickschutzhüllen gesteckt und gegebenenfalls verklebt werden kann. Danach erfolgt ein Einlegen der Knickschutzhülle 29ʺʺ in dem Zusatzmodul 30‴, so dass dann die Elektronik eingesetzt werden kann. Wenn die Schraube 20‴ montiert ist, kann dann das Zusatzmodul 30‴ auf die Schraube 20‴ beziehungsweise die Unterlegscheibe 10‴ aufgesetzt werden. Das Befestigen erfolgt mittels der Klipse 35‴.

Bezug nehmend auf Fig. 6j-p wird nun der Klips 35‴ im Detail erläutert. Dieser dient, wie bereits oben erwähnt, zur Befestigung des Zusatzmoduls 30‴ auf der Unterlegscheibe 10‴, um eine axiale Sicherung zu realisieren. Die Klipse 35‴ sind, wie in Fig. 6j oder k gezeigt, seitlich angeordnet und initial mit dem Zusatzmodul 30‴ versehen. Wie in Fig. 6m dargestellt ist, umfasst jeder Klips einen umgefalzten Bügel 35b‴ und einen Anker 35a‴. Der umgefalzte Bügel 35b‴ ermöglicht eine Federbewegung, während der Anker 35a‴ dazu dient, um den Klips mit dem Grundkörper des Zusatzmoduls 30‴ zu verbinden. Das ist beispielsweise in Fig. 6j gezeigt. Die Verbindung erfolgt derart, dass der Bügel 35b‴ in dem Bereich des Ankers 35a‴ eine Verbreiterung aufweist (vgl. 35v‴), so dass diese in den Grundkörper beziehungsweise in eine Art Hinterschneidung des Grundkörpers 30‴ eingeführt werden kann. Der Anker 35a‴ formt einen Fixierstift und kann nachher eingesetzt werden, wie in den Fig. 6m, o und p dargestellt ist. Infolge der so vorgenommenen Fixierung kann der Bügel 35b‴ nach außen gebogen werden und ermöglicht es, eine Kraft auf die Unterlegscheibe 10‴ auszuüben. Mittels dieser Kraft rastet dann der Bügel 35‴ mit seiner Rastnase 35n‴ in den Eingriffnahmeabschnitt 12e‴ ein.

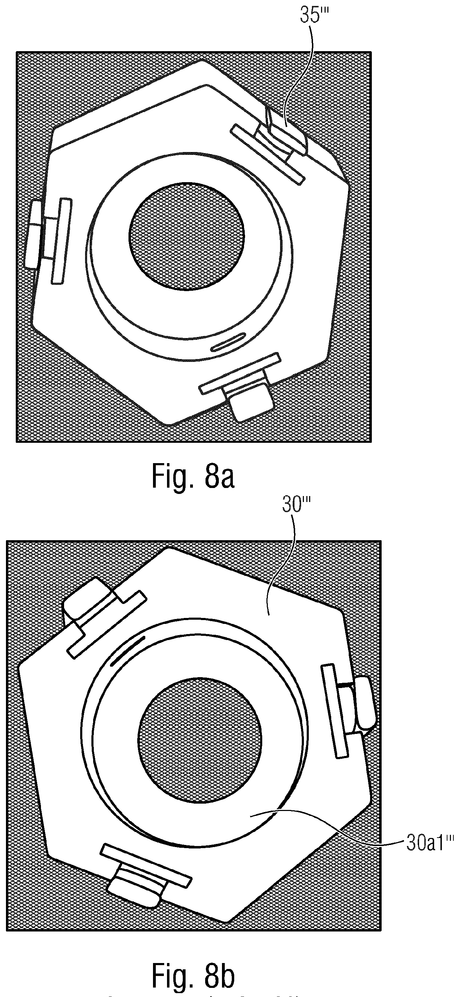

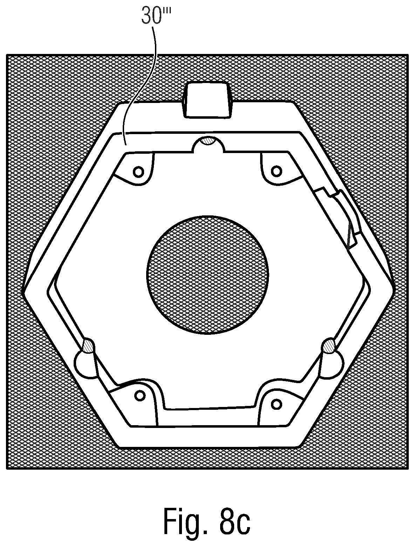

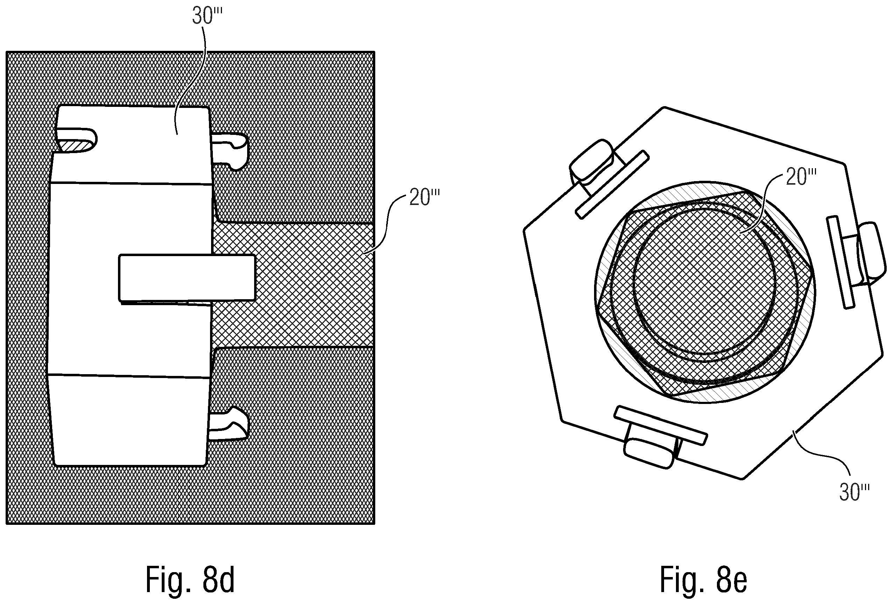

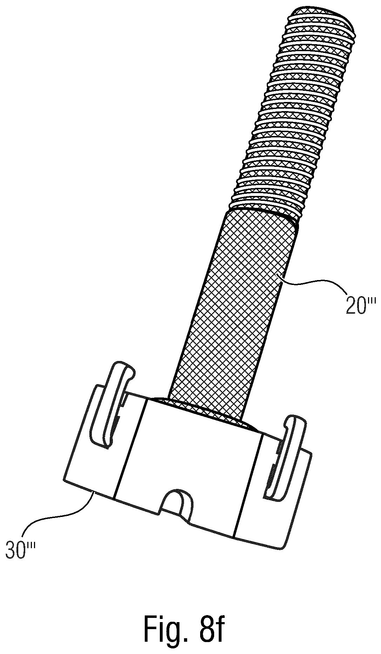

Fig. 8a und b zeigen die Fixierungsklipse 35‴, die in den Grundkörper des Zusatzmoduls 30‴ eingesetzt sind. In diesem Ausführungsbeispiel wird von einem Kunststoffgehäuse ausgegangen. Wie hier oder auch schon bei Fig. 6p zu erkennen ist, ist die Ausnehmung 30a1‴ unausgeführt, das heißt also nicht ausgebildet, um ein Drehmoment auf die Schraube zu übertragen. Die Fig. 8d, e und f zeigen die Verbindung des Zusatzmoduls 30‴ mit der Schraube 20‴.

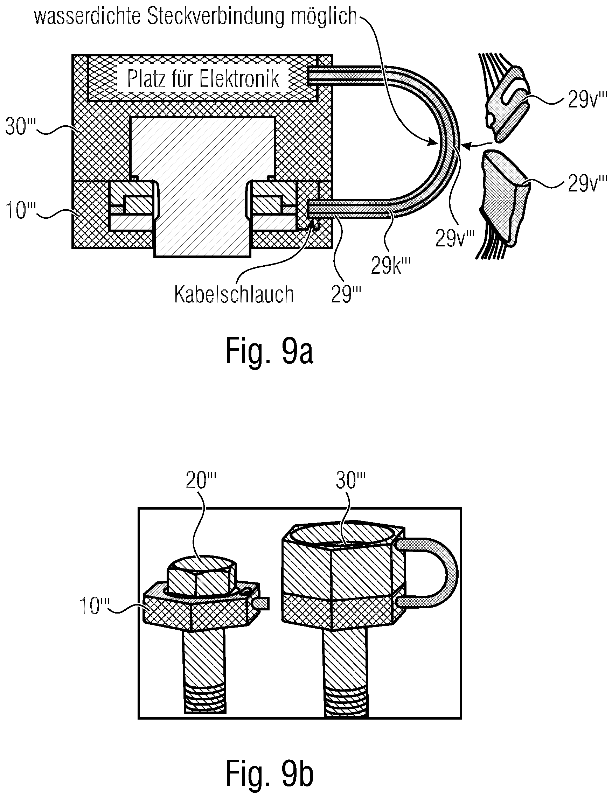

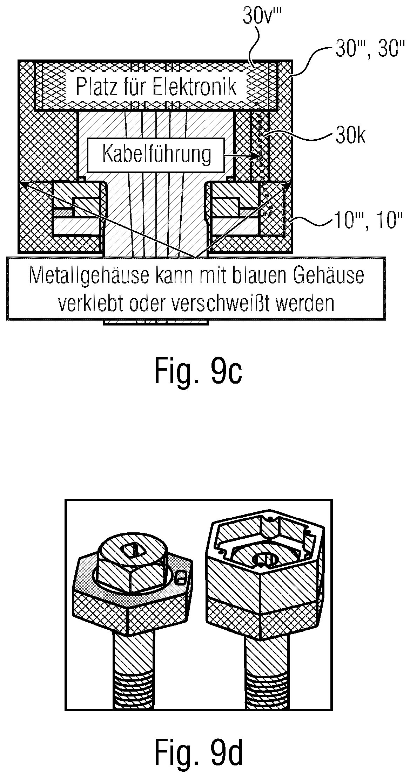

Bezug nehmend auf Fig. 9 werden nun zwei verschiedene Varianten der Kabelführung erläutert. Die Variante aus Fig. 9a und b ist im Wesentlichen identisch mit der Variante aus Fig. 6g. Es wird seitlich mittels eines Kabelschuhs beziehungsweise Kabelschlauchs 29‴ das Kabel 29k‴ aus der Unterlegscheibe 10‴ rausgeführt. In analoger Weise erfolgt die Einführung des Kabels 29k‴ in das Zusatzmodul 30‴. Um die Montage zu vereinfachen, kann eine wasserdichte Steckverbindung 29v‴ vorgesehen sein. Durch diese Steckverbindung 29v‴ kann erst die Unterlegscheibe 10‴ mit der Schraube 20‴ fixiert werden, bevor dann in einem nachgelagerten Schritt das Zusatzmodul 30‴ mit seiner Elektronik angeschlossen wird (vgl. Fig. 9b).

In Fig. 9c ist eine weitere Variante der Kabelführung gezeigt. Hier weist das Zusatzmodul 30" oder das Zusatzmodul 30‴ eine interne Kabelführung 30k auf. Diese erstreckt sich durch den Grundkörper des Zusatzmoduls 30" beziehungsweise 30‴ von der Ausnehmung 30b‴ in Richtung der Unterlegscheibe 10" beziehungsweise 10‴. Diese Variante ist vorteilhaft, wenn vor der Montage das Zusatzmodul 30" mit der Unterlegscheibe 10" verklebt wird. Das ist so in Fig. 9d dargestellt.

An dieser Stelle sei angemerkt, dass Ausführungsbeispiele rein illustrativ sind, während der Schutzbereich durch die nachfolgenden Patentansprüche festgelegt wird.

### Bezugszeichenliste

Unterlegscheibe (10, 10', 10", 10‴
Trägerelement (12, 12', 12", 12‴)
Gegenelement (14, 14', 14", 14‴)
Sensorisches Schichtsystem (16, 16', 16", 16‴)
Innenkontur (12a)
Innengeometrie (g12a)
Außengeometrie (g14)
Ausnehmung (12a)
Schraubenelement (20, 20', 20", 20‴)
Schraubachse (20a)
Auswerteelektronik (34)
Zusatzmodul (30, 30', 30", 30‴)
Aussparung beim Zusatzmodul (30a2")

## Patentansprüche

1. Unterlegscheibe (10, 10', 10", 10‴), mit folgenden Merkmalen:
einem Trägerelement (12, 12', 12", 12‴);
einem Gegenelement (14, 14', 14", 14‴); und
ein sensorisches Schichtsystem (16, 16', 16", 16‴), das zwischen dem Trägerelement (12, 12', 12", 12‴) und dem Gegenelement (14, 14', 14", 14‴) angeordnet ist und ausgebildet ist, um ausgehend von einer zwischen dem Trägerelement (12, 12', 12", 12‴) und Gegenelement (14, 14', 14", 14‴) vorherrschenden Kraft entlang einer Schraubachse (20a) und/oder vorherrschenden Druckkraft oder Vibration ein Sensorsignal auszugeben;
wobei das Trägerelement (12, 12', 12", 12‴) und das Gegenelement (14, 14', 14", 14‴) entlang einer Schraubachse (20a) angeordnet sind und wobei das Trägerelement (12, 12', 12", 12‴) eine Geometrie aufweist, die mit einer Geometrie des Gegenelements (14, 14', 14", 14‴) in Eingriff bringbar ist, um eine Rotation zwischen Trägerelement (12, 12', 12", 12‴) und Gegenelement (14, 14', 14", 14‴) zu begrenzen oder zu vermeiden;
wobei die Geometrie des Trägerelements (12, 12', 12", 12‴) durch eine Innenkontur (12a) gebildet ist und/oder eine Zahnform, eine Vielzahnform, oder eine Sechskantform aufweist; und wobei die Geometrie des Gegenelements (14, 14', 14", 14‴) durch eine Außenkontur gebildet ist und/oder eine Zahnform, eine Vielzahnform, oder eine Sechskantform aufweist;
wobei das Trägerelement (12, 12', 12", 12‴) eine Ausnehmung mit einer Innengeometrie aufweist, wobei das Gegenelement (14, 14', 14", 14‴) eine Außengeometrie (g14) entsprechend der Innengeometrie des Trägerelements (12, 12', 12", 12‴) aufweist.

2. Unterlegscheibe (10, 10', 10", 10‴) gemäß Anspruch 1, wobei das Trägerelement (12, 12', 12", 12‴) und das Gegenelement (14, 14', 14", 14‴) einen Formschluss bilden.

3. Unterlegscheibe (10, 10', 10", 10‴) gemäß einem der vorherigen Ansprüche, wobei das Gegenelement (14, 14', 14", 14‴) in die Ausnehmung (12a) des Trägerelements (12, 12', 12", 12‴) eingelegt ist; und/oder
wobei das sensorische Schichtsystem (16, 16', 16", 16‴) auf einem separaten Träger angeordnet ist, der zwischen dem Trägerelement (12, 12', 12", 12‴) und dem Gegenelement (14, 14', 14", 14‴) eingebettet ist.

4. Unterlegscheibe (10, 10', 10", 10‴) gemäß einem der vorherigen Ansprüche, wobei das Trägerelement (12, 12', 12", 12‴) eine (radiale) Außengeometrie (g12a) mit einer Sechskantform und/oder einer Schlüsselweite aufweist; und/oder
wobei das Trägerelement (12, 12', 12", 12‴) und/oder das Gegenelement (14, 14', 14", 14‴) ein oder mehrere definierte Kontaktflächen oder definierte Erhebungen gegenüber dem sensorischen Schichtsystem (16, 16', 16", 16‴) aufweist.

5. Unterlegscheibe (10, 10', 10", 10‴) gemäß einem der vorherigen Ansprüche, wobei das sensorische Schichtsystem (16, 16', 16", 16‴) ausgebildet ist, um ausgehend von einer vorherrschenden Temperatur ein Temperatursignal auszugeben; und/oder
wobei das sensorische Schichtsystem (16, 16', 16", 16‴) ausgebildet ist, um ausgehend von einer vorherrschenden Vibration ein die Vibration beschreibendes Vibrationssignal auszugeben.

6. Schraubverbindungssystem mit folgenden Merkmalen:
einem Schraubelement (20, 20', 20", 20‴), insbesondere Schraube, Mutter, Bolzen, herkömmliche Schraube, DIN-Schraube, DIN-Mutter oder Sechskantschraube; und
einer Unterlegscheibe (10, 10', 10", 10‴) gemäß einem der vorherigen Ansprüche, wobei das Schraubelement (20, 20', 20", 20‴) entlang der Schraubachse (20a) durch die Unterlegscheibe (10, 10', 10", 10‴) hindurchragt.

7. Schraubverbindungssystem gemäß Anspruch 6, wobei das Verbindungssystem ein auf das Schraubelement (20, 20', 20", 20‴) aufsetzbares, aufsteckbares und/oder aufklemmbares Zusatzmodul (30, 30', 30", 30‴) aufweist, wobei das Zusatzmodul (30, 30', 30", 30‴) eine integrierte Elektronik oder eine integrierte Elektronik mit integrierter Auswertelektronik (34) aufweist.

8. Schraubverbindungssystem gemäß Anspruch 7, wobei das Zusatzmodul (30, 30', 30", 30‴) eine Aussparung für einen Kopf des Schraubelements (20, 20', 20", 20‴) und/oder eine Aussparung für die integrierte Elektronik oder die integrierte Elektronik und integrierte Auswerteelektronik (34) aufweist; und/oder
wobei das Zusatzmodul (30, 30', 30", 30‴) fluchtend zu dem Schraubelement (20, 20', 20", 20‴) oder einer Erstreckungsrichtung des Schraubelements (20, 20', 20", 20‴) angeordnet ist.

9. Schraubverbindungssystem gemäß Anspruch 7, wobei das Verbindungssystem ein Zusatzmodul (30, 30', 30", 30‴) mit integrierter Elektronik oder mit integrierter Elektronik und integrierter Auswerteelektronik (34) aufweist, wobei das Schraubelement (20, 20', 20", 20‴) in das Zusatzmodul (30, 30', 30", 30‴) so eingebettet ist, dass eine Rotation des Zusatzmoduls (30, 30', 30", 30‴) eine Rotation des Schraubelements (20, 20', 20", 20‴) bewirkt.

10. Schraubverbindungssystem gemäß Anspruch 9, wobei das Zusatzmodul (30, 30', 30", 30‴) eine Aussparung mit ein oder mehreren Eingriffsflächen für das Schraubelement (20, 20', 20", 20‴) oder ein oder mehrere Eingriffsflächen für einen Kopf des Schraubelements (20, 20', 20", 20‴) oder ein oder mehrere Eingriffsflächen für eine Schlüsselweite des Schraubelements (20, 20', 20", 20‴) aufweist; und/oder
wobei die ein oder mehreren Eingriffsflächen ausgebildet sind, um ein Drehmoment auf das Schraubelement (20, 20', 20", 20‴) zu übertragen; und/oder
wobei das Zusatzmodul (30, 30', 30", 30‴) eine sechskantige Aussparung aufweist.

11. Schraubverbindungssystem gemäß einem der Ansprüche 7 bis 10, wobei das Zusatzmodul (30, 30', 30", 30‴) eine Außenkontur in Form einer Schlüsselweite aufweist.

12. Schraubverbindungssystem gemäß einem der Ansprüche 7 bis 11, wobei das Zusatzmodul (30, 30', 30", 30‴) einen Thermogenerator aufweist, der mit dem Schraubelement (20, 20', 20", 20‴) in Kontakt ist und/oder der auf das Schraubelement (20, 20', 20", 20‴) aufgepresst ist, um eine thermisch leitfähige Verbindung herzustellen; und/oder
wobei die Außengeometrie des aufsetzbaren Zusatzmoduls (30, 30', 30", 30‴) angepasst ist an die Außengeometrie der Unterlegscheibe (10, 10', 10", 10‴) und/oder wobei die Außengeometrie des aufsetzbaren Zusatzmoduls (30, 30', 30", 30‴) fluchtend mit der Außengeometrie der Unterlegscheibe (10, 10', 10", 10‴) ist; und/oder
wobei das Zusatzmodul (30, 30', 30", 30‴) mit der Unterlegscheibe (10, 10', 10", 10‴) verbunden, verklebt oder verschweißt ist; und/oder
wobei das Zusatzmodul (30, 30', 30", 30‴) auf die Unterlegscheibe (10, 10', 10", 10‴) aufgeschraubt ist oder wobei das Zusatzmodul (30, 30', 30", 30‴) auf die Unterlegscheibe (10, 10', 10", 10‴) mittels separaten Schrauben aufgeschraubt ist; oder
wobei das Zusatzmodul (30, 30', 30", 30‴) auf die Unterlegscheibe (10, 10', 10", 10‴) mittels Klipsen aufgesteckt ist; oder
wobei das Zusatzmodul (30, 30', 30", 30‴) mit der Unterlegscheibe (10, 10', 10", 10‴) verbunden, verklebt oder verschweißt ist wobei durch die Verbindung, Verklebung, Verschweißung oder Verschraubung eine Pressung zwischen einer Elektronikkomponente und dem Schraubelement (20, 20', 20", 20‴) sichergestellt wird; und/oder
wobei das Zusatzmodul (30, 30', 30", 30‴) eine integrierte Kabelführung aufweist, so dass eine Elektronik des Zusatzmoduls (30, 30', 30", 30‴) mit der Sensorschicht verbindbar ist; und/oder
wobei die Sensorschicht mit einer Elektronik über ein externes Kabel oder ein externes verbindbares Kabel verbindbar ist.

13. Schraubverbindungssystem gemäß einem der Ansprüche 7 bis 12, wobei das Zusatzmodul (30, 30', 30", 30‴) ein Kühlelement oder eine als Kühlelement ausgebildete Oberfläche und/oder eine als Kühlelement ausgebildete radiale Oberfläche aufweist; und/oder
wobei das Zusatzmodul (30, 30', 30", 30‴) ein Funkmodul, eine Batterie oder eine Solarzelle aufweist.

14. Verfahren zur Herstellung einer Schraubverbindung mittels eines Schraubverbindungssystems gemäß Anspruch 10 mit folgenden Schritten:
Bereitstellen der Unterlegscheibe (10, 10', 10", 10‴);
Verbinden, Verkleben oder Verschweißen der Unterlegscheibe (10, 10', 10", 10‴ mit dem Zusatzmodul (30, 30', 30", 30‴);
Einlegen des Schraubelements (20, 20', 20", 20‴); und
Anziehen des Schraubelements (20, 20', 20", 20‴) durch Übertragen eines Drehmoments auf das Schraubelement (20, 20', 20", 20‴) mittels des Zusatzmoduls (30, 30', 30", 30‴) und der Unterlegscheibe (10, 10', 10", 10‴).

15. Verfahren zum Herstellen einer Schraubverbindung mittels eines Verbindungssystems gemäß Anspruch 7 mit folgenden Schritten:
Bereitstellen der Unterlegscheibe (10, 10', 10", 10‴);
Einschrauben des Schraubelements (20, 20', 20", 20‴) unter Verwendung der Unterlegscheibe (10, 10', 10", 10‴);
Aufsetzen des Zusatzmoduls (30, 30', 30", 30‴) unter Verwendung einer Klemm- oder Schraubverbindung.

## Claims

1. Washer (10, 10', 10", 10‴), comprising:
a carrier element (12, 12', 12", 12‴);
a counter element (14, 14', 14", 14‴); and
a sensory layer system (16, 16', 16", 16‴) arranged between the carrier element (12, 12', 12", 12‴) and the counter element (14, 14', 14", 14‴) and configured to output a sensor signal on the basis of a force prevailing between the carrier element (12, 12', 12", 12‴) and the counter element (14, 14', 14", 14‴) along a screw axis (20a) and/or a prevailing pressure force or vibration;
wherein the carrier element (12, 12', 12", 12‴) and the counter element (14, 14', 14", 14‴) are arranged along a screw axis (20a) and wherein the carrier element (12, 12', 12", 12‴) comprises a geometry that is engageable with a geometry of the counter element (14, 14', 14", 14‴) so as to limit or prevent a rotation between the carrier element (12, 12', 12", 12‴) and the counter element (14, 14', 14", 14‴);
wherein the geometry of the carrier element (12, 12', 12", 12‴) is configured by an inner contour (12a) und/or comprises a tooth shape, a multi-tooth shape, or a hexagonal shape; and wherein the geometry of the counter element (14, 14', 14", 14‴) is configured by an outer contour and/or comprises a tooth shape, a multi-tooth shape, or a hexagonal shape;
wherein the carrier element (12, 12', 12", 12‴) comprises a recess with an inner geometry, wherein the counter element (14, 14', 14", 14‴) comprises an outer geometry (g14) corresponding to the inner geometry of the carrier element (12, 12', 12", 12‴).

2. Washer (10, 10', 10", 10‴) according to claim 1, wherein the carrier element (12, 12', 12", 12‴) and the counter element (14, 14', 14", 14‴) form a form fit.

3. Washer (10, 10', 10", 10‴) according to any one of the preceding claims, wherein the counter element (14, 14', 14", 14‴) is placed into the recess (12a) of the carrier element (12, 12', 12", 12‴); and/or
wherein the sensory layer system (16, 16', 16", 16‴) is arranged on a separate carrier embedded between the carrier element (12, 12', 12", 12‴) and the counter element (14, 14', 14", 14‴).

4. Washer (10, 10', 10", 10‴) according to any one of the preceding claims, wherein the carrier element (12, 12', 12", 12‴) comprises a (radial) outer geometry (g12a) with a hexagonal shape and/or a wrench size; and/or
wherein the carrier element (12, 12', 12", 12‴) and/or the counter element (14, 14', 14", 14‴) comprises one or more specified contact faces or specified bumps opposite the sensory layer system (16, 16', 16", 16‴).

5. Washer (10, 10', 10", 10‴) according to any one of the preceding claims, wherein the sensory layer system (16, 16', 16", 16‴) is configured to output a temperature signal on the basis of a prevailing temperature; and/or
wherein the sensory layer system (16, 16', 16", 16‴) is configured to output a vibration signal describing a vibration on the basis of a prevailing vibration.

6. Screw connection system, comprising:
a screw element (20, 20', 20", 20‴), in particular a screw, a nut, a bolt, a conventional screw, a DIN screw, a DIN nut, or a hexagonal screw; and
a washer (10, 10', 10", 10‴) according to any one of the preceding claims, wherein the screw element (20, 20', 20", 20‴) extends through the washer (10, 10', 10", 10‴ along the screw axis (20a).

7. Screw connection system according to claim 6, wherein the connection system comprises an additional module (30, 30', 30", 30‴) that can be placed onto, plugged onto and/or clamped onto the screw element (20, 20', 20", 20‴), wherein the additional module (30, 30', 30", 30‴) comprises an integrated electronic system or an integrated electronic system with an integrated electronic evaluation system (34).

8. Screw connection system according to claim 7, wherein the additional module (30, 30', 30", 30‴) comprises a recess for a head of the screw element (20, 20', 20", 20‴) and/or a recess for the integrated electronic system or the integrated electronic system and the integrated electronic evaluation system (34); and/or
wherein the additional module (30, 30', 30", 30‴) is arranged so as to be flush to the screw element (20, 20', 20", 20‴) or to an extension direction of the screw element (20, 20', 20", 20‴).

9. Screw connection system according to claim 7, wherein the connection system comprises an additional module (30, 30', 30", 30‴) with an integrated electronic system or with an integrated electronic system and an integrated electronic evaluation system (34), wherein the screw element (20, 20', 20", 20‴) is embedded into the additional module (30, 30', 30", 30‴) so that a rotation of the additional module (30, 30', 30", 30‴) causes a rotation of the screw element (20, 20', 20", 20‴).

10. Screw connection system according to claim 9, wherein the additional module (30, 30', 30", 30‴) comprises a recess with one or multiple engagement faces for the screw element (20, 20', 20", 20‴) or one or multiple engagement faces for a head of the screw element (20, 20', 20", 20‴) or one or multiple engagement faces for a wrench size of the screw element (20, 20', 20", 20‴); and/or
wherein the one or the multiple engagement faces are configured to transfer a torque to the screw element (20, 20', 20", 20‴); and/or
wherein the additional module (30, 30', 30", 30‴) comprises a hexagonal recess.

11. Screw connection system according to any of claims 7 to 10, wherein the additional module (30, 30', 30", 30‴) comprises an outer contour in the form of a wrench size.

12. Screw connection system according to any of claims 7 to 11, wherein the additional module (30, 30', 30", 30‴) comprises a thermogenerator in contact with the screw element (20, 20', 20", 20‴) and/or pressed onto the screw element (20, 20', 20", 20‴) so as to create a thermally conductive connection; and/or
wherein the outer geometry of the attachable additional module (30, 30', 30", 30‴ is adapted to the outer geometry of the washer (10, 10', 10", 10‴) and/or wherein the outer geometry of the attachable additional module (30, 30', 30", 30‴) is flush with the outer geometry of the washer (10, 10', 10", 10‴); and/or
wherein the additional module (30, 30', 30", 30‴) is connected, glued, or soldered to the washer (10, 10', 10", 10‴); and/or
wherein the additional module (30, 30', 30", 30‴) is screwed onto the washer (10, 10', 10", 10‴) or wherein the additional module (30, 30', 30", 30‴) is screwed onto the washer (10, 10', 10", 10‴) by means of separate screws; or
wherein the additional module (30, 30', 30", 30‴) is clipped onto the washer (10, 10', 10", 10‴) by means of clips; or
wherein the additional module (30, 30', 30", 30‴) is connected, glued, or soldered to the washer (10, 10', 10", 10‴), wherein a compression between an electronic component and the screw element (20, 20', 20", 20‴) is ensured through the connection, gluing, soldering, or screwing; and/or
wherein the additional module (30, 30', 30", 30‴) comprises an integrated cable guide so that an electronic system of the additional module (30, 30', 30", 30‴) can be connected to the sensor layer; and/or
wherein the sensor layer can be connected to the electronic system via an external cable or a cable that can be connect externally.

13. Screw connection system according to any of claims 7 to 12, wherein the additional module (30, 30', 30", 30‴) comprises a cooling element or a surface configured as a cooling element and/or a radial surface configured as a cooling element; and/or
wherein the additional module (30, 30', 30", 30‴) comprises a radio module, a battery, or a solar cell.

14. Method for manufacturing a screw connection by means of a screw connection system according to claim 10, comprising:
providing the washer (10, 10', 10", 10‴);
connecting, gluing or soldering the washer (10, 10', 10", 10‴) to the additional module (30, 30', 30", 30‴);
inserting the screw element (20, 20', 20", 20‴); and
tightening the screw element (20, 20', 20", 20‴) by transferring a torque onto the screw element (20, 20', 20", 20‴) by means of the additional module (30, 30', 30", 30‴) and the washer (10, 10', 10", 10‴).

15. Method for manufacturing a screw connection by means of a connection system according to claim 7, comprising:
providing the washer (10, 10', 10", 10‴);
screwing in the screw element (20, 20', 20", 20‴) by using the washer (10, 10', 10", 10‴);
attaching the additional module (30, 30', 30", 30‴) by using a clamp connection or screw connection.

## Revendications

1. Rondelle (10, 10', 10", 10"'), avec les caractéristiques suivantes :
un élément de support (12, 12', 12", 12"') ;
un élément complémentaire (14, 14', 14", 14"') ; et
un système de couches formant capteur (16, 16', 16", 16"') qui est disposé entre l'élément de support (12, 12', 12", 12"') et l'élément complémentaire (14, 14', 14", 14‴) et est conçu pour émettre un signal de capteur à partir d'une force prédominante entre l'élément de support (12, 12', 12", 12"') et l'élément complémentaire (14, 14', 14", 14"') le long d'un axe de vissage (20a) et/ou d'une force de pression ou d'une vibration prédominante ;
dans laquelle l'élément de support (12, 12', 12", 12"') et l'élément complémentaire (14, 14', 14", 14"') sont disposés le long d'un axe de vissage (20a) et dans laquelle l'élément de support (12, 12', 12", 12"') présente une géométrie qui peut être amenée en engagement avec une géométrie de l'élément complémentaire (14, 14', 14", 14"') afin de limiter ou d'éviter une rotation entre l'élément de support (12, 12', 12", 12"') et l'élément complémentaire (14, 14', 14", 14"') ;
dans laquelle la géométrie de l'élément de support (12, 12', 12", 12"') est formée par un contour intérieur (12a) et/ou présente une forme de dent, une forme à plusieurs dents ou une forme hexagonale ; et dans laquelle la géométrie de l'élément complémentaire (14, 14', 14", 14"') est formée par un contour extérieur et/ou présente une forme de dent, une forme à plusieurs dents ou une forme hexagonale ;
dans laquelle l'élément de support (12, 12', 12", 12‴) présente un gabarit avec une géométrie intérieure (12, 12', 12", 12"'), dans laquelle l'élément complémentaire (14, 14', 14", 14"') présente une géométrie extérieure (g14) correspondant à la géométrie intérieure de l'élément de support (12, 12', 12", 12"').

2. Rondelle (10, 10', 10", 10"') selon la revendication 1, dans laquelle l'élément de support (12, 12', 12", 12"') et l'élément complémentaire (14, 14', 14", 14"') sont en complémentarité de forme.

3. Rondelle (10, 10', 10", 10"') selon une des revendications précédentes, dans laquelle l'élément complémentaire (14, 14', 14", 14"') est inséré dans le gabarit (12a) de l'élément de support (12, 12', 12", 12"') ; et/ou
dans laquelle le système de couches formant capteur (16, 16', 16", 16"') est disposé sur un support séparé qui est intégré entre l'élément de support (12, 12', 12", 12"') et l'élément complémentaire (14, 14', 14", 14‴).

4. Rondelle (10, 10', 10", 10"') selon une des revendications précédentes, dans laquelle l'élément de support (12, 12', 12", 12"') présente une géométrie extérieure (radiale) (g12a) avec une forme hexagonale et/ou un surplat ; et/ou
dans laquelle l'élément de support (12, 12', 12", 12"') et/ou l'élément complémentaire (14, 14', 14", 14"') présente une ou plusieurs surfaces de contact définies ou des élévations définies vis-à-vis du système de couches formant capteur (16, 16', 16", 16"').

5. Rondelle (10, 10', 10", 10"') selon une des revendications précédentes, dans laquelle le système de couches formant capteur (16, 16', 16", 16"') est conçu pour émettre un signal de température à partir d'une température prédominante ; et/ou
dans laquelle le système de couches formant capteur (16, 16', 16", 16"') est conçu pour émettre un signal de vibration décrivant la vibration à partir d'une vibration prédominante.

6. Système d'assemblage par vis avec les caractéristiques suivantes :
un élément de vis (20, 20', 20", 20‴), en particulier vis, écrou, boulon, vis conventionnelle, vis DIN, écrou DIN ou vis à tête hexagonale ; et
une rondelle (10, 10', 10", 10"') selon une des revendications précédentes, dans lequel l'élément de vis (20, 20', 20", 20"') fait saillie à travers la rondelle (10, 10', 10", 10"') le long de l'axe de vissage (20a).

7. Système d'assemblage par vis selon la revendication 6, dans lequel le système d'assemblage présente un module supplémentaire (30, 30', 30", 30"') qui peut être placé, enfiché et/ou serré sur l'élément de vis (20, 20', 20", 20"'), dans lequel le module supplémentaire (30, 30', 30", 30"') présente une électronique intégrée ou une électronique intégrée avec électronique d'évaluation intégrée (34).

8. Système d'assemblage par vis selon la revendication 7, dans lequel le module supplémentaire (30, 30', 30", 30‴) présente un évidement pour une tête de l'élément de vis (20, 20', 20", 20"') et/ou un évidement pour l'électronique intégrée ou l'électronique intégrée et l'électronique d'évaluation intégrée (34) ; et/ou
dans lequel le module supplémentaire (30, 30', 30", 30"') est disposé en alignement avec l'élément de vis (20, 20', 20", 20"') ou une direction d'extension de l'élément de vis (20, 20', 20", 20"').

9. Système d'assemblage par vis selon la revendication 7, dans lequel le système d'assemblage présente un module supplémentaire (30, 30', 30", 30"') avec électronique intégrée ou avec électronique intégrée et électronique d'évaluation intégrée (34), dans lequel l'élément de vis (20, 20', 20", 20"') est intégré dans le module supplémentaire (30, 30', 30", 30"') de telle sorte qu'une rotation du module supplémentaire (30, 30', 30", 30"') provoque une rotation de l'élément de vis (20, 20', 20", 20"').

10. Système d'assemblage par vis selon la revendication 9, dans lequel le module supplémentaire (30, 30', 30", 30"') présente un évidement avec une ou plusieurs surfaces d'engagement pour l'élément de vis (20, 20', 20", 20"') ou une ou plusieurs surfaces d'engagement pour une tête de l'élément de vis (20, 20', 20", 20"') ou une ou plusieurs surfaces d'engagement pour un surplat de l'élément de vis (20, 20', 20", 20"') ; et/ou
dans lequel les une ou plusieurs surfaces d'engagement sont conçues pour transmettre un couple à l'élément de vis (20, 20', 20", 20"') ; et/ou
dans lequel le module supplémentaire (30, 30', 30", 30"') présente un évidement hexagonal.

11. Système d'assemblage par vis selon une des revendications 7 à 10, dans lequel le module supplémentaire (30, 30', 30", 30"') présente un contour extérieur en forme de surplat.

12. Système d'assemblage par vis selon une des revendications 7 à 11, dans lequel le module supplémentaire (30, 30', 30", 30"') présente un thermogénérateur qui est en contact avec l'élément de vis (20, 20', 20", 20"') et/ou qui est pressé sur l'élément de vis (20, 20', 20", 20"') afin de réaliser un assemblage thermoconducteur ; et/ou
dans lequel la géométrie extérieure du module supplémentaire qui peut être placé (30, 30', 30", 30"') est adaptée à la géométrie extérieure de la rondelle (10, 10', 10", 10"') et/ou dans lequel la géométrie extérieure du module supplémentaire qui peut être placé (30, 30', 30", 30"') est alignée avec la géométrie extérieure de la rondelle (10, 10', 10", 10"') ; et/ou
dans lequel le module supplémentaire (30, 30', 30", 30"') est assemblé, collé ou soudé à la rondelle (10, 10', 10", 10"') ; et/ou
dans lequel le module supplémentaire (30, 30', 30", 30"') est vissé sur la rondelle (10, 10', 10", 10‴) ou dans lequel le module supplémentaire (30, 30', 30", 30"') est vissé sur la rondelle (10, 10', 10", 10"') à l'aide de vis séparées ; ou
dans lequel le module supplémentaire (30, 30', 30", 30"') est enfiché sur la rondelle (10, 10', 10", 10"') à l'aide de clips ; ou
dans lequel le module supplémentaire (30, 30', 30", 30"') est assemblé, collé ou soudé à la rondelle (10, 10', 10", 10‴), dans lequel l'assemblage, le collage, le soudage ou le vissage est assuré par une pression entre un composant électronique et l'élément de vis (20, 20', 20", 20"') ; et/ou
dans lequel le module supplémentaire (30, 30', 30", 30"') présente un chemin de câbles intégré de telle sorte qu'une électronique du module supplémentaire (30, 30', 30", 30"') puisse être assemblée à la couche formant capteur ; et/ou
dans lequel la couche formant capteur peut être assemblée à une électronique par le biais d'un câble externe ou d'un câble qui peut être assemblé de manière externe.

13. Système d'assemblage par vis selon une des revendications 7 à 12, dans lequel le module supplémentaire (30, 30', 30", 30"') présente un élément de refroidissement ou une surface conçue sous la forme d'un élément de refroidissement et/ou une surface radiale conçue sous la forme d'un élément de refroidissement ; et/ou
dans lequel le module supplémentaire (30, 30', 30", 30"') présente un module radio, une batterie ou une cellule solaire.

14. Procédé destiné à fabriquer un assemblage par vis à l'aide d'un assemblage par vis selon la revendication 10 avec les étapes suivantes :
fournir la rondelle (10, 10', 10", 10"') ;
assembler, coller ou souder la rondelle (10, 10', 10", 10‴) au module supplémentaire (30, 30', 30", 30"') ;
insérer l'élément de vis (20, 20', 20", 20"') ; et
serrer l'élément de vis (20, 20', 20", 20"') en transmettant un couple sur l'élément de vis (20, 20', 20", 20"') à l'aide du module supplémentaire (30, 30', 30", 30"') et de la rondelle (10, 10', 10", 10"').

15. Procédé de fabrication d'un assemblage par vis à l'aide d'un système d'assemblage selon la revendication 7 avec les étapes suivantes :
fournir la rondelle (10, 10', 10", 10"') ;
visser l'élément de vis (20, 20', 20", 20"') en utilisant la rondelle (10, 10', 10", 10"') ;
placer le module supplémentaire (30, 30', 30", 30"') en utilisant un assemblage par colle ou par vis.
